# EUROPEAN PATENT APPLICATION

(11) **EP 4 386 093 A1**
(43) Date of publication of application: **19.06.2024**
(21) Application number: 22855906.8
(22) Date of filing: 10.08.2022
(51) Int. Cl.: C21D 9/00, C21D 9/50, C22C 38/00, C22C 38/60, C21D 1/18

(54) **JOINED PART AND JOINED STEEL SHEET**

(30) Priority: 11.08.2021 JP 2021131274
(71) Applicant: NIPPON STEEL CORPORATION, Chiyoda-ku Tokyo 100-8071 (JP)
(72) Inventor: NAITO, Yasuaki, Tokyo 100-8071 (JP); TABATA, Shinichiro, Tokyo 100-8071 (JP); IRIKAWA, Hideaki, Tokyo 100-8071 (JP); KUSUMI, Kazuhisa, Tokyo 100-8071 (JP)
(74) Representative: Zimmermann & Partner Patentanwälte mbB
(86) International application number: PCT/JP2022/030629
(87) International publication number: WO 2023/017844

(57) **Abstract**

This joint component includes: a first steel member; a second steel member; and a joint portion which is formed at butted portions between the first steel member and the second steel member and includes a weld metal and a heat-affected zone, in which the first steel member includes a steel sheet substrate and an Al-Fe-based coating formed on a surface of the steel sheet substrate, and has a tensile strength of more than 1,500 MPa, and when a cross section of the weld metal in a sheet thickness direction orthogonal to an extension direction of the joint portion is defined as a measuring surface, an average Cu content in the weld metal at the measuring surface is 0.03% or more and 3.00% or less by mass%.

## Description

### [Technical Field of the Invention]

The present invention relates to a joint component and a joint steel sheet serving as a material thereof.

Priority is claimed on Japanese Patent Application No. 2021-131274, filed August 11, 2021, the content of which is incorporated herein by reference.

### [Related Art]

In the automotive field, in order to improve both fuel efficiency and collision safety against the background of recent stringent environmental regulations and collision safety standards, the application of a steel sheet having high tensile strength (high strength steel sheet) has expanded. However, press formability of a steel sheet decreases with high-strengthening, which makes it difficult to manufacture a product having a complex shape.

Specifically, ductility of the steel sheet decreases with the high-strengthening, and there is a problem in that the steel sheet is fractured at a highly processed portion in the case of being processed into a complex shape. In addition, with the high-strengthening of the steel sheet, residual stress after processing causes springback and wall warpage, which also causes a problem that dimensional accuracy is deteriorated. Therefore, it is not easy to process a steel sheet having high strength, particularly a tensile strength of 780 MPa or more, into a product having a complex shape by press-forming. Roll forming rather than press forming makes it easier to process a high strength steel sheet, but the application thereof is limited to components having a uniform cross section in a longitudinal direction thereof.

Therefore, in recent years, for example, as disclosed in Patent Documents 1 to 3, a hot stamping technique has been adopted as a technique of press-forming a material that is difficult to form, such as a high strength steel sheet. The hot stamping technique is a hot forming technique of heating a material to be subjected to forming and then forming the material.

In this technique, the material is formed after being heated. Therefore, the steel is soft at the time of forming and has good formability. Accordingly, even a high strength steel sheet can be accurately formed into a complex shape. Furthermore, in the hot stamping technique, since quenching is performed simultaneously with forming by a press die, a steel member after the forming has sufficient strength.

For example, according to Patent Document 1, it is disclosed that a steel member having a tensile strength of 1,400 MPa or more after forming can be obtained by the hot stamping technique.

In recent years, countries around the world have set higher CO₂ reduction targets, and each automobile manufacturer is working toward fuel efficiency while taking collision safety into consideration. Not only gasoline vehicles but also electric vehicles that are under rapid progress require, as its materials, high-strength materials that protect not only passengers but also batteries from collision and that cancel out the amount of an increase in weight. For example, in a steel member that is in use for vehicles and the like, a hot stamping member that has a higher strength than a strength (1.5 GPa = 1,500 MPa) that is commonly used as a steel member formed by hot stamping at present is required.

However, in general, the steel member decreases in deformability with high-strengthening. Therefore, in a case where fracture occurs at a portion where deformation is concentrated at the time of a vehicle collision at an early stage of collision deformation, a load capacity and collision absorbed energy commensurate with high-strengthening may not be obtained. In addition, most of metal materials deteriorate in various properties with high-strengthening, and decreases in deformability and hydrogen embrittlement resistance. Particularly in a steel member, it is known that the susceptibility to hydrogen embrittlement increases when a tensile strength is 1.2 GPa or more, and there have been cases of hydrogen embrittlement cracking in bolt steel for which high-strengthening has been progressed ahead of the automotive field. Therefore, in a hot stamping member having a tensile strength of more than 1.5 GPa, there is a concern that the susceptibility to hydrogen embrittlement further increases.

In addition, in a case where the hot stamping technique is applied to a steel sheet, heating to a high temperature causes oxidation of iron or the like on a surface and formation of scale (oxide). Therefore, a step of removing the scale (descaling step) is required after hot press working is performed, resulting in a reduction in productivity. In addition, for a member or the like that requires corrosion resistance, it is necessary to perform an antirust treatment or a metal coating on a surface of the member after working, so that a surface cleaning step and a surface treatment step are required, which also reduces productivity.

As an example of a method of suppressing such a reduction in productivity, there is a method of coating a steel sheet. In general, as a coating of a steel sheet, various materials such as an organic material and an inorganic material are used. In particular, for steel sheets, a zinc-based plating having a sacrificial protection action has been widely applied from the viewpoint of anticorrosion performance and a steel sheet production technology. Meanwhile, a heating temperature in hot press working is often a temperature higher than an Ac3 transformation point of steel in order to obtain a quenching effect. However, this heating temperature is higher than a decomposition temperature of the organic material, a boiling point of a metal material such as a Zn-based material, and the like. Therefore, in a case where a steel sheet coated with an organic material or a Zn-based metal material is heated for hot pressing, a plating layer on a surface of the steel sheet evaporates, which may cause significant deterioration of surface properties.

In order to avoid such deterioration of the surface properties, for a steel sheet that is heated to a high temperature to be subjected to hot press working, for example, the steel sheet is preferably coated with an Al-based metal having a higher boiling point than an organic material coating or a Zn-based metal coating.

By using the steel sheet coated with the Al-based metal, a so-called Al-plated steel sheet, adhesion of scale to a surface of the steel sheet can be prevented, and a step such as a descaling step becomes unnecessary, resulting in an improvement in productivity. In addition, since the Al-based metal coating also has an antirust effect, corrosion resistance after coating is also improved.

Due to the background described above, in recent years, the application of a steel member (referred to as a tailored blank material), in which a region where deformation is concentrated and a region where deformation does not occur at the time of a collision are separately formed, to a vehicle body has spread. In particular, a steel member obtained by butt-joining base steel sheets having different strengths or sheet thicknesses by welding is referred to as a tailor welded blank material (TWB material). In addition, as the TWB material, a steel sheet having an Al plating is generally used in many cases in order to improve productivity or prevent deterioration of surface properties.

However, when a TWB material is manufactured by joining steel sheets having an Al plating, there is a problem in that Al on surfaces melts into weld metal of a joint portion, resulting in a significant decrease in strength. Therefore, in a case where a TWB material is manufactured by joining steel sheets having an Al plating, joining is often performed after cutting the Al plating on surfaces of butted portions which are to become a joint portion. In this case, no plating (coating) is present on the surface of the joint portion.

In a steel member that is in use for vehicles, there is a risk that hydrogen embrittlement cracking may be caused due to hydrogen that is generated from corrosion of steel while vehicles are in operation. As described above, since the susceptibility to hydrogen embrittlement of a steel extremely increases particularly in a strength range of more than 1.5 GPa, it is considered that the steel may undergo hydrogen embrittlement due to a trace amount of hydrogen generated by slight corrosion. In the above-mentioned TWB material, since the joint portion has strength similar to high strength steel sheets which are joined, depending on the location, no coating is present on the surface in many cases, and it is difficult to completely prevent corrosion. Therefore, in order to apply a hot stamping member having a strength of more than 1.5 GPa to a vehicle body for a further reduction in weight of the vehicle body, it is necessary to utilize TWB technology to reduce a risk of early fracture during collision deformation, and furthermore, to sufficiently reduce a risk of hydrogen embrittlement cracking at the joint portion.

There are three main reasons why a weld metal is likely to undergo hydrogen embrittlement at a joint portion. Specifically, the weld metal at the joint portion is likely to undergo hydrogen embrittlement by the reasons that (i) a coating is not present on a surface of the weld metal in many cases and corrosion easily processes, (ii) the joint portion is a transition zone in terms of strength or sheet thickness and tend to be applied local stress at the time of a collision, and (iii) a structure of a melted and solidified portion, such as the weld metal, is coarse and prone to hydrogen embrittlement. That is, the weld metal at the joint portion in TWB is subjected to more severe conditions than a base metal in terms of the generation of hydrogen, the application of stress, and material strength limits, all of which contribute to hydrogen embrittlement.

Regarding a high strength steel having a tensile strength of more than 1.5 GPa, for example, Patent Document 2 discloses a press-formed article having excellent toughness and a tensile strength of 1.8 GPa or more, which is hot press-formed. Patent Document 3 discloses a steel having a tensile strength as extremely high as 2.0 GPa or more, and further having good toughness and ductility. Patent Document 4 discloses a steel having a tensile strength as high as 1.8 GPa or more and further having good toughness. Patent Document 5 discloses a steel having a tensile strength as extremely high as 2.0 GPa or more and further having good toughness.

However, in Patent Documents 2 to 5, regarding hydrogen embrittlement resistance of a TWB material, measures against hydrogen embrittlement in a weld line of a joint portion where embrittlement is a concern particularly in a corrosive environment are not sufficient. Therefore, there are cases where the steels of Patent Documents 2 to 5 cannot sufficiently meet the demand for higher safety in the use of the steels as vehicle members although the steels have a tensile strength of more than 1.5 GPa.

Regarding TWB materials, for example, Patent Documents 6 to 16 disclose control of a shape of an exposed portion (a portion from which an Al plating is removed), use of a filler or metal powder containing γ-genic element during welding, and the like in order to solve the problem of a decrease in strength of a joint portion.

However, in none of the patent documents, measures against hydrogen embrittlement in the weld metal of the joint portion of the TWB material are sufficient, and in the application of a high strength steel having a tensile strength of more than 1.5 GPa to a vehicle member, there are cases where the demand for higher safety cannot be sufficiently met.

### [Prior Art Document]

### [Patent Document]

[Patent Document 1] Japanese Unexamined Patent Application, First Publication No. 2002-102980
[Patent Document 2] Japanese Unexamined Patent Application, First Publication No. 2012-180594
[Patent Document 3] Japanese Unexamined Patent Application, First Publication No. 2012-001802
[Patent Document 4] PCT International Publication No. WO2015/182596
[Patent Document 5] PCT International Publication No. WO2015/182591
[Patent Document 6] PCT International Publication No. WO2013/014512
[Patent Document 7] PCT International Publication No. WO2007/125182
[Patent Document 8] Published Japanese Translation No. 2009-534529 of the PCT International Publication
[Patent Document 9] PCT International Publication No. WO2015/121074
[Patent Document 10] PCT International Publication No. WO2017/050711
[Patent Document 11] Published Japanese Translation No. 2018-534143 of the PCT International Publication
[Patent Document 12] Published Japanese Translation No. 2017-512137 of the PCT International Publication
[Patent Document 13] PCT International Publication No. WO2015/086781
[Patent Document 14] Published Japanese Translation No. 2016-531753of the PCT International Publication
[Patent Document 15] PCT International Publication No. WO2019/093440
[Patent Document 16] PCT International Publication No. WO2020/152887

### [Disclosure of the Invention]

### [Problems to be Solved by the Invention]

The present invention has been made to solve the above problems, and an object thereof is to provide a joint component having a joint portion having excellent hydrogen embrittlement resistance even when a steel member (TWB material) is obtained by butt-joining base steel sheets having different strengths or sheet thicknesses by welding, and a joint steel sheet serving as a material thereof.

### [Means for Solving the Problem]

A gist of the present invention is the following joint component in a steel member (TWB material) obtained by butt-joining base steel sheets having different strengths or sheet thicknesses by welding, and a joint steel sheet serving as a material thereof.
[1] A joint component according to an aspect of the present invention includes: a first steel member; a second steel member; and a joint portion which is formed at butted portions between the first steel member and the second steel member and includes a weld metal and a heat-affected zone, in which the first steel member includes a steel sheet substrate and an Al-Fe-based coating formed on a surface of the steel sheet substrate, and has a tensile strength of more than 1,500 MPa, and when a cross section of the weld metal in a sheet thickness direction orthogonal to an extension direction of the joint portion is defined as a measuring surface, an average Cu content in the weld metal at the measuring surface is 0.03% or more and 3.00% or less by mass%.
[2] In the joint component according to [1], a Vickers hardness of the weld metal at the measuring surface may be a hardness that is higher than the higher of a hardness of a steel sheet substrate of the second steel member or 350 Hv.
[3] In the joint component according to [1], an average Al content in the weld metal at the measuring surface may be less than 1.00% by mass%.
[4] In the joint component according to [2], an average Al content in the weld metal at the measuring surface may be less than 1.00% by mass%.
[5] In the joint component according to [3], Cu/Al, which is a ratio of the average Cu content to the average Al content in the weld metal at the measuring surface, may be 0.15 to 3.90.
[6] In the joint component according to [4], a ratio of the average Cu content to the average Al content in the weld metal at the measuring surface may be 0.15 to 3.90.
[7] In the joint component according to any one of [1] to [6], the steel sheet substrate of the first steel member may contain, as a chemical composition, by mass%: C: 0.25% to 0.65%; Si: 2.00% or less; Mn: 0.15% to 3.00%; P: 0.050% or less; S: 0.0100% or less; N: 0.010% or less; O: 0.010% or less; Al: 1.00% or less; B: 0.0005% to 0.0100%; Cu: 0% to 3.00%; Ti: 0% to 0.100%; Nb: 0% to 0.10%; Mo: 0% to 1.00%; Cr: 0% to 1.00%; Ni: 0% to 1.00%; V: 0% to 1.00%; Ca: 0% to 0.010%; Mg: 0% to 0.010%; Sn: 0% to 1.00%; W: 0% to 1.00%; Sb: 0% to 1.00%; Zr: 0% to 1.00%; REM: 0% to 0.30%; and a remainder: Fe and impurities.
[8] In the joint component according to [7], a Cu content in the chemical composition of the steel sheet substrate of the first steel member may be 0.05% to 3.00%.
[9] In the joint component according to any one of [1] to [6], a total amount of one or more of Mn, Cr, Mo, Ni, Sn, and W in the weld metal at the measuring surface may be 1.2% or more.
[10] In the joint component according to [7], a total amount of one or more of Mn, Cr, Mo, Ni, Sn, and W in the weld metal at the measuring surface may be 1.2% or more.
[11] In the joint component according to [8], a total amount of one or more of Mn, Cr, Mo, Ni, Sn, and W in the weld metal at the measuring surface may be 1.2% or more.
[12] In the joint component according to any one of [1] to [6], a tensile strength of the second steel member may be 500 MPa or more and 1,500 MPa or less.
[13] In the joint component according to [7], a tensile strength of the second steel member may be 500 MPa or more and 1,500 MPa or less.
[14] In the joint component according to [8], a tensile strength of the second steel member may be 500 MPa or more and 1,500 MPa or less.
[15] In the joint component according to [9], a tensile strength of the second steel member may be 500 MPa or more and 1,500 MPa or less.
[16] In the joint component according to [10], a tensile strength of the second steel member may be 500 MPa or more and 1,500 MPa or less.
[17] In the joint component according to [11], a tensile strength of the second steel member may be 500 MPa or more and 1,500 MPa or less.
[18] A joint steel sheet according to another aspect of the present invention includes: a first steel sheet; a second steel sheet; and a joint portion which is formed at butted portions between the first steel sheet and the second steel sheet and includes a weld metal and a heat-affected zone, in which the first steel sheet includes a steel sheet substrate, and an Al-based coating formed on a surface of the steel sheet substrate, and when a cross section of the weld metal in a sheet thickness direction orthogonal to an extension direction of the joint portion is defined as a measuring surface, an average Cu content in the weld metal at the measuring surface is 0.03% or more and 3.00% or less by mass%.
[19] In the joint steel sheet according to [18], an average Al content in the weld metal at the measuring surface may be less than 1.00% by mass%.
[20] In the joint steel sheet according to [18] or [19], the steel sheet substrate of the first steel sheet may contain, as a chemical composition, by mass%: C: 0.25% to 0.65%; Si: 2.00% or less; Mn: 0.15% to 3.00%; P: 0.050% or less; S: 0.0100% or less; N: 0.010% or less; O: 0.010% or less; Al: 1.00% or less; B: 0.0005% to 0.0100%; Cu: 0% to 3.00%; Ti: 0% to 0.100%; Nb: 0% to 0.10%; Mo: 0% to 1.00%; Cr: 0% to 1.00%; Ni: 0% to 1.00%; V: 0% to 1.00%; Ca: 0% to 0.010%; Mg: 0% to 0.010%; Sn: 0% to 1.00%; W: 0% to 1.00%; Sb: 0% to 1.00%; Zr: 0% to 1.00%; REM: 0% to 0.30%; and a remainder: Fe and impurities.
[21] In the joint steel sheet according to [20], a Cu content in the chemical composition of the steel sheet substrate of the first steel sheet may be 0.05% to 3.00%.
[22] In the joint steel sheet according to [18] or [19], a total amount of one or more of Mn, Cr, Mo, Ni, Sn, and W in the weld metal at the measuring surface may be 1.2% or more.
[23] In the joint steel sheet according to [20], a total amount of one or more of Mn, Cr, Mo, Ni, Sn, and W in the weld metal at the measuring surface may be 1.2% or more.
[24] In the joint steel sheet according to [21], a total amount of one or more of Mn, Cr, Mo, Ni, Sn, and W in the weld metal at the measuring surface may be 1.2% or more.

### [Effects of the Invention]

According to the above-described aspects of the present invention, it is possible to provide a joint component having a joint portion having excellent hydrogen embrittlement resistance even when a steel member (TWB material) is obtained by butt-joining base steel sheets having different strengths or sheet thicknesses by welding, and a joint steel sheet serving as a material thereof.

The joint component according to the aspect of the present invention has high strength and excellent hydrogen embrittlement resistance and thus contributes to an improvement in fuel efficiency and collision safety when being applied to a vehicle component.

### [Brief Description of the Drawings]

FIG. 1 is a schematic view showing an example of a joint component according to the present embodiment.
FIG. 2 is a schematic view showing an example of a joint steel sheet according to the present embodiment.

### [Embodiments of the Invention]

In order to obtain a joint component in which at least a portion of steel members (TWB materials) butt-joined by welding base steel sheets which are different from each other in strength or sheet thickness has a high tensile strength and a joint portion having excellent hydrogen embrittlement resistance is provided, the present inventors investigated effects of a structure of a weld metal of the joint portion and a steel sheet serving as a material on these properties. As a result, the following findings were obtained.

Most of materials to be used for hot stamping members that are commonly manufactured are coated steel sheets in which a surface of a steel sheet is subjected to an aluminum plating (Al plating) having excellent corrosion resistance. When hot stamping is performed on this coated steel sheet, an alloying reaction between Al in a plating layer on the surface and Fe in the steel sheet progresses during heating, and a steel member including a coating containing Al and Fe (hereinafter, referred to as an Al-Fe-based coating in some cases) (coated steel member) is obtained. Most of the commonly used steel sheets showing a tensile strength of about 1.5 GPa after hot stamping contain about 0.20 mass% of C, and strength after the hot stamping is secured due to C. By butt-joining this coated steel sheet to another steel sheet and then performing a heat treatment, a joint component having an Al-Fe-based coating can be obtained.

(a) In order to achieve a further reduction in weight of a vehicle body, the present inventors conducted a detailed examination to obtain a high strength member that has a tensile strength of more than 1.5 GPa (1,500 MPa) after hot stamping by increasing a C content. As a result, it was found that by setting the C content in at least one of the steel sheets to be butt-welded to 0.25 mass% or more, an ultrahigh strength of more than 1.5 GPa in terms of tensile strength can be obtained in that portion after a heat treatment including quenching, such as hot stamping. On the other hand, with the ultrahigh-strengthening to a tensile strength of more than 1.5 GPa, deformability decreases, and there is a concern about a risk of early fracture during collision deformation. In addition, there is a concern about a risk that susceptibility to hydrogen embrittlement increases and hydrogen embrittlement cracking occurs due to hydrogen generated in a corrosive environment while a vehicle is in operation. In particular, in a case where Al-based coated steel sheets or an Al-based coated steel sheet and another coated steel sheet are butt-joined, a portion or the entire amount of Al on surfaces of butted portions, which are to become a joint portion, is often cut, so that corrosion resistance due to aluminum plating cannot be guaranteed in a cut portion. Therefore, even though the joint portion has a strength similar to that of the steel member to be joined, no coating is present on the surface in many cases, and corrosion progresses easily. In addition, as described above, the joint portion is under stricter conditions in terms of both a stress state and a material limit than those of the steel member. Therefore, there is a greater concern about a risk of hydrogen embrittlement at the joint portion.
(b) Therefore, the present inventors studied a method of suppressing hydrogen embrittlement by improving corrosion resistance in a weld metal of a joint portion, which serves as an embrittlement origin, in a joint component. As a result, it was found that corrosion resistance is improved by including Cu, which is an element that improves corrosion resistance, in a weld metal and hydrogen embrittlement can thus be suppressed.
(c) The present inventors also investigated hydrogen embrittlement resistance of a coated steel member having a tensile strength of more than 1.5 GPa other than the joint portion, and studied preferable component design and structural design for securing the hydrogen embrittlement resistance.

Based on the above findings, the present inventors developed a joint component including a joint portion having excellent hydrogen embrittlement resistance and a high strength coated steel member having a tensile strength of more than 1.5 GPa in which the hydrogen embrittlement resistance in a corrosive environment is significantly improved by suppressing corrosion of a weld metal of the joint portion, reducing the amount of infiltrating hydrogen, and improving the hydrogen embrittlement resistance of a steel. Such a joint component has a high strength and a low risk of hydrogen embrittlement and thus can be applied to vehicle bodies more safely.

Hereinafter, each requirement of a joint component according to an embodiment of the present invention (the joint component according to the present embodiment) and a joint steel sheet serving as a material thereof (the joint steel sheet according to the present embodiment) will be described in detail.

### (A) Joint Component

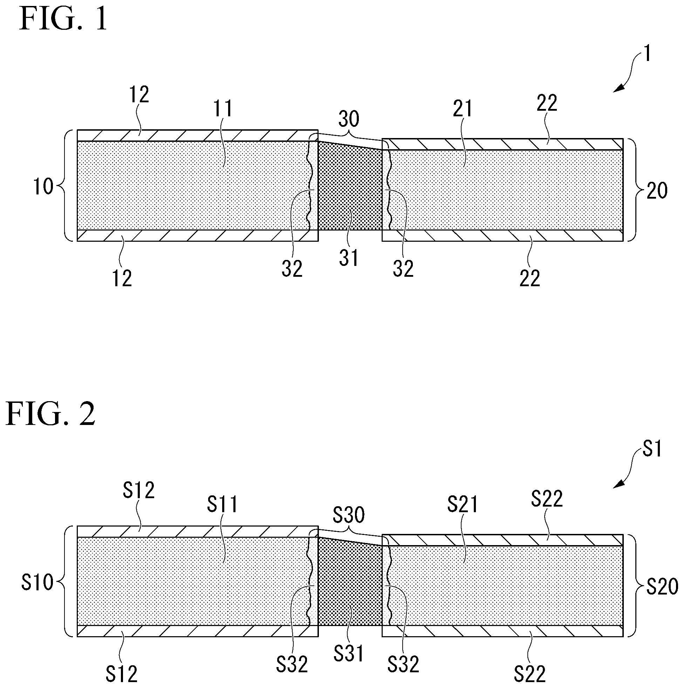

As shown in FIG. 1, a joint component 1 according to the present embodiment includes a first steel member 10, a second steel member 20, and a joint portion 30 which is formed at butted portions between the first steel member 10 and the second steel member 20 and joins the first steel member 10 and the second steel member 20 to each other. This first steel member 10 is a coated steel member having a steel sheet substrate 11 having a predetermined chemical composition and a coating (Al-Fe-based coating) 12 that is formed on a surface of the steel sheet substrate 11 and contains Al and Fe.

The second steel member 20 has a steel sheet substrate 21 and may have a coating 22.

In addition, the joint portion 30 includes a weld metal 31 and a heat-affected zone 32. The Al-Fe-based coating 12 of the first steel member 10 and/or the coating 22 of the second steel member 20 may be formed up to a surface of the heat-affected zone 32.

In addition, when a cross section of the joint component 1 according to the present embodiment in a sheet thickness direction orthogonal to an extension direction of the joint portion 30 (in FIG. 1, a direction toward the back of the paper surface) is defined as a measuring surface, an average Cu content in the weld metal at the measuring surface is 0.03% or more and 3.00% or less by mass%.

Hereinafter, each will be described.

### (A1) First Steel Member

As described above, the first steel member 10 included in the joint component 1 according to the present embodiment has the steel sheet substrate 11 and the coating (Al-Fe-based coating) 12 that is formed on the surface of the steel sheet substrate 11 and contains Al and Fe.

As described below, the first steel member 10 is obtained by performing a heat treatment accompanying quenching, such as hot stamping, on a joint steel sheet including a coated steel sheet having a steel sheet substrate and an Al-based coating.

### (A1-1) Steel Sheet Substrate

### [Tensile Strength]

In the first steel member 10 included in the joint component 1 according to the present embodiment, a tensile strength of the steel sheet substrate 11 is set to more than 1.5 GPa (1,500 MPa) in order to meet the recent demand for high-strengthening. An upper limit of the tensile strength is not limited, but the tensile strength may be set to 3,000 MPa or less because there is a concern about a decrease in deformability or an increase in the susceptibility to hydrogen embrittlement due to an increase in strength.

A tensile test is conducted in accordance with the regulations of ASTM Standard E8. A test piece is cut out from the first steel member such that a longitudinal direction thereof is parallel to a weld line, both surfaces are evenly ground to a thickness of 1.2 mm, and thereafter a half-size sheet-shaped test piece of ASTM standard E8 (parallel portion length: 32 mm, parallel portion sheet width: 6.25 mm) is collected. Here, in a case where the sheet thickness is less than 1.2 mm, a half-size sheet-shaped test piece of ASTM standard E8 is collected after removing the coating or mill scale (oxide scale).

Then, a strain gauge having a gauge length of 5 mm is attached to a center of a parallel portion, a room temperature tensile test is conducted at a strain rate of 3 mm/min, and a tensile strength (maximum strength) is measured.

### [Chemical Composition]

The chemical composition of the steel sheet substrate 11 of the first steel member 10 included in the joint component 1 according to the present embodiment is not limited. However, in a case where securing a tensile strength of more than 1.5 GPa after a heat treatment and an improvement in hydrogen embrittlement resistance are taken into consideration, an amount of each element is preferably set as follows.

Specifically, the first steel member 10 preferably contains, as a chemical composition, by mass%: C: 0.25% to 0.65%; Si: 2.00% or less; Mn: 0.15% to 3.00%; P: 0.050% or less; S: 0.0100% or less; N: 0.010% or less; O: 0.010% or less; Al: 1.00% or less; B: 0.0005% to 0.0100%; Cu: 0% to 3.00%; Ti: 0% to 0.100%; Nb: 0% to 0.10%; Mo: 0% to 1.00%; Cr: 0% to 1.00%; Ni: 0% to 1.00%; V: 0% to 1.00%; Ca: 0% to 0.010%; Mg: 0% to 0.010%; Sn: 0% to 1.00%; W: 0% to 1.00%; Sb: 0% to 1.00%; Zr: 0% to 1.00%; REM: 0% to 0.30%; and a remainder: Fe and impurities.

The reasons for limiting the amount of each element are as follows. Here, the chemical composition of the steel sheet substrate 11 refers to a chemical composition of a portion of the first steel member 10 excluding the Al-Fe-based coating 12 on the surface (for example, a 1/4 thickness position from the surface of the steel sheet substrate). Hereinafter, % regarding the content is mass% unless otherwise specified.

### C: 0.25% to 0.65%

C is an element that enhances hardenability of steel and increases the strength of the steel member that is obtained after quenching such as hot stamping. However, when a C content is less than 0.25%, it becomes difficult to secure sufficient strength (more than 1.5 GPa) in the steel member after quenching (a steel member obtained by quenching). Therefore, the C content is preferably set to 0.25% or more. The C content is more preferably 0.28% or more.

On the other hand, when the C content is more than 0.65%, the strength of the steel member after quenching becomes too high, and the decrease in the hydrogen embrittlement resistance becomes significant. Therefore, the C content is preferably set to 0.65% or less. The C content is more preferably 0.60% or less.

### Si: 2.00% or Less

When a Si content in steel is more than 2.00%, a heating temperature required for austenitic transformation becomes significantly high during the heat treatment (quenching). Accordingly, there are cases where the cost required for the heat treatment increases, or ferrite remains during heating, resulting in a decrease in the strength of the steel member. Therefore, the Si content is preferably set to 2.00% or less. The Si content is more preferably 1.00% or less.

The Si content may be 0%, but Si is an effective element as a deoxidizing element. In order to obtain this effect, the Si content may be set to 0.01% or more, or may be set to 0.10% or more.

In addition, Si is an effective element for enhancing the hardenability of steel and for stably securing the strength of the steel member after quenching. Therefore, Si may be contained. In a case of obtaining this effect, the Si content is preferably 0.25% or more.

### Mn: 0.15% to 3.00%

Mn is a very effective element for enhancing the hardenability of the steel and increasing the strength of the steel member after quenching. Mn is an element that further lowers an Ac3 point and promotes lowering of a quenching treatment temperature. In addition, Mn can further improve the corrosion resistance by being contained in the weld metal of the joint portion. When a Mn content is less than 0.15%, these effects are not sufficient. Therefore, the Mn content is preferably set to 0.15% or more. The Mn content is more preferably 0.25% or more.

On the other hand, when the Mn content is more than 3.00%, there is a concern that the hydrogen embrittlement resistance of the steel member after quenching deteriorates. Therefore, the Mn content is preferably set to 3.00% or less. The Mn content is more preferably 2.00% or less, and even more preferably 1.30% or less.

### P: 0.050% or Less

P is an element that decreases the hydrogen embrittlement resistance of the steel member after quenching. In particular, when a P content is more than 0.050%, the decrease in the hydrogen embrittlement resistance becomes significant. Therefore, the P content is preferably limited to 0.050% or less. The P content is more preferably limited to 0.005% or less.

Since it is preferable that the P content is small, the P content may be 0%. However, the P content may be set to 0.001% or more from the viewpoint of cost.

### S: 0.0100% or Less

S is an element that decreases the hydrogen embrittlement resistance of the steel member after quenching. In particular, when a S content is more than 0.0100%, the decrease in the hydrogen embrittlement resistance becomes significant. Therefore, the S content is preferably limited to 0.0100% or less. The S content is more preferably limited to 0.0050% or less.

Since it is preferable that the S content is small, the S content may be 0%. However, the S content may be set to 0.0001% or more from the viewpoint of cost.

### N: 0.010% or Less

N is an element that decreases the hydrogen embrittlement resistance of the steel member after quenching. In particular, when a N content is more than 0.010%, coarse nitrides are formed in steel, and the hydrogen embrittlement resistance significantly decreases. Therefore, the N content is preferably set to 0.010% or less. The N content is more preferably limited to 0.006% or less.

A lower limit of the N content does not need to be particularly limited and may be 0%. However, setting the N content to less than 0.0002% leads to an increase in steelmaking cost and is economically undesirable. Therefore, the N content may be set to 0.0002% or more, 0.0008% or more, or 0.001% or more.

### O: 0.010% or Less

O is an element that decreases the hydrogen embrittlement resistance of the steel member after quenching. In particular, when an O content is more than 0.010%, coarse nitrides are formed in steel, and the hydrogen embrittlement resistance significantly decreases. Therefore, the O content is preferably set to 0.010% or less. The O content is more preferably limited to 0.006% or less.

A lower limit of the O content does not need to be particularly limited and may be 0%. However, setting the O content to less than 0.0002% leads to an increase in steelmaking cost and is economically undesirable. Therefore, the O content may be set to 0.0002% or more, 0.0008% or more, or 0.001% or more.

### Al: 1.00% or Less

Al is an element generally used as a steel deoxidizing agent. Therefore, Al may be contained. In a case of obtaining this effect, an Al content is preferably set to 0.01% or more.

However, when the Al content is more than 1.00%, the above effect is saturated and the economic efficiency is lowered. Therefore, in a case where Al is contained, the Al content is preferably set to 1.00% or less. The Al content is more preferably 0.50% or less.

### B: 0.0005% to 0.0100%

B is an important element having an action of dramatically enhancing the hardenability of steel even in a trace amount. In addition, B is an element that strengthens grain boundaries and enhances the hydrogen embrittlement resistance by being segregated at the grain boundaries, and is an element that suppresses the growth of austenite grains when the steel sheet is heated. When a B content is less than 0.0005%, there are cases where the above effects cannot be sufficiently obtained. Therefore, the B content is set to 0.0005% or more. The B content is preferably 0.0010% or more.

On the other hand, when the B content is more than 0.0100%, a large amount of coarse compounds are precipitated, and the hydrogen embrittlement resistance of the steel member decreases. Therefore, the B content is preferably set to 0.0100% or less. The B content is more preferably 0.0080% or less.

### Cu: 0% to 3.00%

Cu is an effective element for enhancing the hardenability of steel and stably securing the strength of the steel member after quenching. In addition, Cu is an element that improves corrosion resistance by being contained in the weld metal of the joint portion. Therefore, Cu is preferably contained. When a Cu content is less than 0.05%, these effects are not sufficient, so that the Cu content is preferably set to 0.05% or more. The Cu content is more preferably 0.10% or more, even more preferably 0.15% or more, and still more preferably 0.20% or more. However, the improvement in the hardenability can also be achieved by another element substituting Cu, and the addition of Cu to the weld metal can also be performed by a filler wire or the like. Accordingly, in that case, the Cu content of the steel member may be less than 0.05%, and may be 0%, for example.

On the other hand, when the Cu content is more than 3.00%, the above effects are saturated and the cost increases. Therefore, in a case where Cu is contained, the Cu content is preferably set to 3.00% or less. The Cu content is more preferably 1.50% or less, and even more preferably 0.80% or less.

In the chemical composition of the steel sheet substrate 11 included in the first steel member 10 included in the joint component 1 of the present embodiment, elements other than the above elements, that is, the remainder may include Fe and impurities, but one or more elements selected from the group consisting of Ti, Nb, Mo, Cr, Ni, V, Ca, Mg, Sn, W, Sb, Zr, and REM may be contained within ranges described below in order to improve various properties (hardenability, strength, hydrogen embrittlement resistance, deoxidation properties, corrosion resistance, and the like) of the steel member and the joint component including this steel member. These elements are optional elements and do not necessarily have to be contained. Therefore, lower limits thereof are 0%.

### Ti: 0% to 0.100%

Ti is an element having an action of refining austenite grains by suppressing recrystallization and by suppressing grain growth by means of the formation of fine carbides when the steel sheet is subjected to a heat treatment by being heated to a temperature of the Ac3 point or higher. Therefore, an effect of improving the hydrogen embrittlement resistance of the steel member can be obtained by including Ti. In addition, Ti is an element that suppresses consumption of B due to precipitation of BN by being preferentially bonded to N in the steel and promotes an effect of improving the hardenability by B, which will be described later. Therefore, Ti may be contained. A Ti content is preferably 0.010% or more, and more preferably 0.015% or more.

On the other hand, when the Ti content is more than 0.100%, the amount of TiC precipitated increases and C is consumed, resulting in a decrease in the strength of the steel member after quenching. Therefore, the Ti content is preferably set to 0.100% or less. The Ti content is more preferably 0.080% or less.

### Nb: 0% to 0.10%

Nb is an element having an action of forming fine carbides and of improving the hydrogen embrittlement resistance of steel by means of the refining effect. When the Nb content is less than 0.02%, there are cases where the above effects cannot be sufficiently obtained. Therefore, in order to obtain the above effects, the Nb content is preferably set to 0.02% or more. The Nb content is more preferably 0.03% or more.

On the other hand, when the Nb content is more than 0.10%, the carbides become coarse and the hydrogen embrittlement resistance of the steel member decreases. Therefore, the Nb content is preferably set to 0.10% or less. The Nb content is more preferably 0.08% or less.

### Mo: 0% to 1.00%

Mo is a very effective element for enhancing the hardenability of the steel and stably securing the strength of the steel member after quenching. In particular, a synergistic effect on the improvement in the hardenability can be obtained by including a compound of Mo and B. In addition, Mo can further improve the corrosion resistance by being contained in the weld metal of the joint portion. Therefore, Mo is preferably contained. When a Mo content is less than 0.10%, these effects are not sufficient, so that the Mo content is preferably set to 0.10% or more. The Mo content is more preferably 0.20% or more.

On the other hand, Mo has an action of stabilizing iron carbides. When the Mo content is more than 1.00%, there are cases where coarse iron carbides remain undissolved when the steel sheet is heated, and the hydrogen embrittlement resistance of the steel member after quenching decreases. In addition, the cost increase is significant. Therefore, in a case where Mo is contained, the Mo content is preferably set to 1.00% or less. The Mo content is more preferably 0.80% or less.

### Cr: 0% to 1.00%

Cr is an effective element for enhancing the hardenability of steel and for stably securing the strength of the steel member after quenching. In addition, Cr can further improve the corrosion resistance by being contained in the weld metal of the joint portion. Therefore, Cr may be contained. In order to obtain the above effects, a Cr content is preferably set to 0.01% or more. The Cr content is more preferably 0.05% or more, and even more preferably 0.08% or more.

On the other hand, when the Cr content is more than 1.00%, the above effects are saturated and the cost increases. Furthermore, since Cr has an action of stabilizing iron carbides, when the Cr content is more than 1.00%, there are cases where coarse iron carbides remain undissolved when the steel sheet is heated, and the hydrogen embrittlement resistance of the steel member after quenching decreases. Therefore, in a case where Cr is contained, the Cr content is preferably set to 1.00% or less. The Cr content is more preferably 0.80% or less.

### Ni: 0% to 1.00%

Ni is an effective element for enhancing the hardenability of steel and stably securing the strength of the steel member after quenching. In addition, Ni is an element that further improves the corrosion resistance by being contained in the weld metal of the joint portion. Therefore, Ni is preferably contained. When a Ni content is less than 0.10%, these effects are not sufficient. Therefore, in a case where Ni is contained, the Ni content is preferably set to 0.10% or more. The Ni content is more preferably 0.20% or more.

On the other hand, when the Ni content is more than 1.00%, a limit hydrogen amount of the steel member decreases. In addition, the cost increase is significant. Therefore, the Ni content is preferably set to 1.00% or less. The Ni content is more preferably 0.25% or less, and even more preferably 0.20% or less.

### V: 0% to 1.00%

V is an element that forms fine carbides and improves the hydrogen embrittlement resistance of the steel member by means of the refining effect or hydrogen trapping effect. Therefore, V may be contained. In order to obtain the above effects, the V content is preferably set to 0.01% or more. The V content is more preferably 0.10% or more.

On the other hand, when the V content is more than 1.00%, the above effects are saturated and the economic efficiency is lowered. Therefore, the V content is preferably set to 1.00% or less. The V content is more preferably 0.80% or less, and even more preferably 0.50% or less.

### Ca: 0% to 0.010%

Ca is an element having an effect of refining inclusions in steel and enhancing the hydrogen embrittlement resistance of the steel member after quenching. Therefore, Ca may be contained. In a case of obtaining the above effects, a Ca content is preferably set to 0.001% or more. The Ca content is more preferably 0.002% or more.

On the other hand, when the Ca content is more than 0.010%, the effects are saturated and the cost increases. Therefore, in a case where Ca is contained, the Ca content is preferably set to 0.010% or less. The Ca content is more preferably 0.005% or less, and even more preferably 0.004% or less.

### Mg: 0% to 0.010%

Mg is an element having an effect of refining inclusions in steel and enhancing the hydrogen embrittlement resistance of the steel member after quenching. Therefore, Mg may be contained. In a case of obtaining the above effects, a Mg content is preferably set to 0.001% or more. The Mg content is more preferably 0.002% or more.

On the other hand, when the Mg content is more than 0.010%, the effects are saturated and the cost increases. Therefore, in a case where Mg is contained, the Mg content is preferably set to 0.010% or less. The Mg content is more preferably 0.005% or less, and even more preferably 0.004% or less.

### Sn: 0% to 1.00%

Sn is an element that improves the corrosion resistance in a corrosive environment. In addition, Sn can further improve the corrosion resistance by being contained in the weld metal of the joint portion. Therefore, Sn may be contained. In order to obtain the above effects, the Sn content is preferably set to 0.01% or more. The Sn content is more preferably 0.03% or more.

On the other hand, when the Sn content is more than 1.00%, the grain boundary strength decreases, and the hydrogen embrittlement resistance of the steel member after quenching decreases. Therefore, the Sn content is preferably set to 1.00% or less. The Sn content is more preferably 0.80% or less, and even more preferably 0.50% or less.

### W: 0% to 1.00%

W is an effective element for enhancing the hardenability of steel and stably securing the strength of the steel member after quenching. In addition, W is an element that further improves the corrosion resistance by being contained in the weld metal of the joint portion. Therefore, W may be contained. In order to obtain the above effects, a W content is preferably set to 0.01% or more. The W content is more preferably 0.03% or more.

On the other hand, when the W content is more than 1.00%, the above effects are saturated and the economic efficiency is lowered. Therefore, the W content is preferably set to 1.00% or less. The W content is more preferably 0.80% or less, and even more preferably 0.50% or less.

### Sb: 0% to 1.00%

Sb is an element that improves the corrosion resistance in a corrosive environment. Therefore, Sb may be contained. In order to obtain the above effect, a Sb content is preferably set to 0.01% or more. The Sb content is more preferably 0.03% or more.

On the other hand, when the Sb content is more than 1.00%, the grain boundary strength decreases, and the hydrogen embrittlement resistance of the steel member after quenching decreases. Therefore, the Sb content is preferably set to 1.00% or less. The Sb content is more preferably 0.80% or less, and even more preferably 0.50% or less.

### Zr: 0% to 1.00%

Zr is an element that improves the corrosion resistance in a corrosive environment. Therefore, Zr may be contained. In order to obtain the above effect, a Zr content is preferably set to 0.01% or more. The Zr content is more preferably 0.03% or more.

On the other hand, when the Zr content is more than 1.00%, the grain boundary strength decreases, and the hydrogen embrittlement resistance of the steel member after quenching decreases. Therefore, the Zr content is preferably set to 1.00% or less. The Zr content is more preferably 0.80% or less, and even more preferably 0.50% or less.

### REM: 0% to 0.30%

Similar to Ca, REM is an element having an effect of refining inclusions in steel and improving the hydrogen embrittlement resistance of the steel member after quenching. Therefore, REM may be contained. In order to obtain the above effects, a REM content is preferably set to 0.01% or more. The REM content is more preferably 0.02% or more.

On the other hand, when the REM content is more than 0.30%, the effects are saturated and the cost increases. Therefore, the REM content is preferably set to 0.30% or less. The REM content is more preferably 0.20% or less, and even more preferably 0.15% or less.

Here, REM refers to a total of 17 elements including Sc, Y, and lanthanoids such as La and Nd, and the REM content means the total amount of these elements. REM is added to molten steel using, for example, an Fe-Si-REM alloy, and this alloy contains, for example, La, Nd, Ce, and Pr.

In the chemical composition of the steel sheet substrate 11 included in the first steel member 10 included in the joint component of the present embodiment, elements other than the above elements, that is, the remainder includes Fe and impurities.

Here, the "impurities" are components that are incorporated due to various factors including raw materials such as ore and scrap and a manufacturing step when the steel sheet is industrially produced, and are acceptable in a range without adversely affecting the properties of the joint component according to the present embodiment.

The chemical composition of the steel sheet substrate 11 can be obtained by the following method.

At a 1/4 thickness position of the steel sheet substrate 11, elemental analysis is performed at five points at equal intervals with a distance of 1 mm or more between measurement points by a general method such as ICP, and obtained amounts at the five points are averaged, whereby the chemical composition of the steel sheet substrate 11 is obtained.

### [Metallographic Structure of Steel Sheet Substrate 11]

A metallographic structure of the steel sheet substrate 11 included in the first steel member 10 included in the joint component 1 according to the present embodiment is preferably a structure primarily containing martensite, which has high strength, in order to obtain a tensile strength of more than 1.5 GPa. An area fraction of martensite is preferably 70% or more. The area fraction of martensite is more preferably 80% or more, and may be 100%.

The metallographic structure of the steel sheet substrate 11 may contain one or more of retained austenite, bainite, ferrite, or pearlite as the remainder other than martensite. Martensite includes not only fresh martensite but also tempered martensite and auto-tempered martensite.

The metallographic structure of the steel sheet substrate 11 can be determined by the following method.

The area fraction of martensite (including tempered martensite and auto-tempered martensite) is measured by a transmission electron microscope (TEM) and an electron beam diffractometer attached to the TEM. Measurement samples are cut out from a 1/2 portion of the steel member in a longitudinal direction (a 1/2 position of a length in the longitudinal direction from a longitudinal direction end portion), a 1/4 width portion (a 1/4 position of a member width in a width direction from a width direction end portion), and a 1/4 thickness portion of the steel sheet substrate 11 (a 1/4 thickness position in the sheet thickness direction from the surface) and used as thin film samples for TEM observation. The TEM observation is performed on a range of the TEM observation set to an area of about 400 µm², each metallographic structure is identified, and an area thereof is measured.

When identifying the metallographic structure, an electron beam diffraction pattern of the thin film sample makes it possible to distinguish between martensite and bainite, which are body-centered cubic lattices, and retained austenite, which is a face-centered cubic lattice. Then, iron carbides (Fe₃C) in martensite and bainite are found by the diffraction pattern, and precipitation morphologies thereof are observed to distinguish between martensite and bainite. Specifically, regarding the precipitation morphology, precipitation with three orientations is determined to be martensite (tempered martensite), and precipitation limited to one orientation is determined to be bainite. A case where precipitation of iron carbide is not observed is also determined to be martensite (fresh martensite).

Microstructural fractions of martensite and bainite measured by the TEM are measured in area%. However, since the metallographic structure of the steel member of the present embodiment has isotropy, values of area fractions can be directly replaced into volume fractions. Carbides are observed to distinguish between martensite and bainite, but in the present embodiment, carbides are not included in the volume fraction of the structure.

Ferrite or pearlite that may be present as the remainder in microstructure can be easily confirmed with an optical microscope or a scanning electron microscope. Specifically, measurement samples are cut out from a 1/2 portion of the steel member in the longitudinal direction (a 1/2 position of the length in the longitudinal direction from the longitudinal direction end portion) and a 1/4 width portion (a 1/4 position of the member width in the width direction from the width direction end portion), and a 1/4 thickness portion of a cross section of the steel sheet substrate in the sheet thickness direction is observed. An observation range of the microscope is set to a range of 40,000 µm² in terms of area. The cut sample is mechanically polished and subsequently mirror-finished. Next, etching is performed with a nital etching solution to reveal ferrite and pearlite, and this is observed with the microscope to confirm the presence of ferrite or pearlite. A structure in which ferrite and cementite are alternately arranged in layers is determined to be pearlite, and a structure in which cementite is precipitated in particles is determined to be ferrite.

A sheet thickness of the steel sheet substrate 11 of the first steel member 10 included in the joint component 1 according to the present embodiment is not limited, but is, for example, 0.8 to 3.2 mm.

### (A1-2) Al-Fe-Based Coating

The first steel member 10 included in the joint component according to the present embodiment has the coating 12 containing Al and Fe (Al-Fe-based coating) on the surface of the steel sheet substrate 11 described above. In the present embodiment, the Al-Fe-based coating is a coating primarily containing Al and Fe, and preferably contains Al and Fe in a total amount of 70 mass% or more. Furthermore, the Al-Fe-based coating is also referred to as a coating, an alloyed plating layer, or an intermetallic compound layer. In addition to Al and Fe, the Al-Fe-based coating may further contain Si, Mg, Ca, Sr, Ni, Cu, Mo, Mn, Cr, C, Nb, Ti, B, V, Sn, W, Sb, Zr, REM, and Zn and a remainder including impurities.

A thickness of the Al-Fe-based coating is preferably 10 µm or more. An upper limit of the thickness of the Al-Fe-based coating is not particularly limited and may be set to 100 µm or less.

The Al-Fe-based coating 12 is preferably formed on both surfaces of the steel sheet substrate 11, but may be formed on only one surface in consideration of an application site.

The thickness of the Al-Fe-based coating can be obtained by observing the cross section with a scanning electron microscope.

Specifically, measurement samples are cut out from a 1/2 portion of the steel member in the longitudinal direction (a 1/2 position of the length in the longitudinal direction from the longitudinal direction end portion) and a 1/4 width portion (a 1/4 width position in the width direction from the width direction end portion) and are observed. An observation range of the microscope is set to, for example, a range of 40,000 µm² in terms of area at a magnification of 400-fold. The cut sample is mechanically polished and subsequently mirror-finished. Next, the thicknesses of the Al-Fe-based coating in 10 random visual fields are measured, and an average value thereof is regarded as the thickness of the Al-Fe-based coating.

Observation with a BSE image (or a COMP image) reveals a clear difference in contrast between the Al-Fe-based coating and the base metal (steel sheet substrate). Therefore, the thickness of the Al-Fe-based coating can be measured by measuring a thickness from an outermost surface to a position where the contrast changes. Measurement is performed at 20 points at equal intervals in an observation photograph, and a distance between the measurement points is set to 6.5 µm. In addition, the observation is performed in five visual fields in the above-described manner, and an average value thereof is used as the thickness of the coating.

In addition, as the chemical composition of the Al-Fe-based coating, the amounts of Al and Fe contained in the Al-Fe-based coating can be obtained by performing spot elemental analysis (beam diameter 1 µm or less) on the observation range described above using an electron probe micro-analyzer (EPMA). A total of 10 points are analyzed in the Al-Fe-based coating in 10 random visual fields, and average values thereof are regarded as the amounts of Al and Fe contained in the Al-Fe-based coating. Even in a case where an element other than Al and Fe is contained, the amount thereof is obtained using the same method.

### (A2) Second Steel Member

In the joint component 1 according to the present embodiment, the second steel member 20 joined to the first steel member 10 through the joint portion 30 is not particularly limited from the viewpoint of the hydrogen embrittlement resistance of the joint portion 30. The steel sheet substrate of the second steel member 20 may include, for example, as a chemical composition, by mass%: C: 0.05% to 0.65%; Si: 2.00% or less; Mn: 0.15% to 3.00%; P: 0.050% or less; S: 0.0100% or less; N: 0.010% or less; O: 0.010% or less; Al: 1.00% or less; B: 0% to 0.0100%; Cu: 0% to 3.00%; Ti: 0% to 0.100%; Nb: 0% to 0.10%; Mo: 0% to 1.00%; Cr: 0% to 1.00%; Ni: 0% to 1.00%; V: 0% to 1.00%; Ca: 0% to 0.010%; Mg: 0% to 0.010%; Sn: 0% to 1.00%; W: 0% to 1.00%; Sb: 0% to 1.00%; Zr: 0% to 1.00%; REM: 0% to 0.30%; and a remainder: Fe and impurities.

The second steel member may have a coating on a part of a surface of the steel sheet substrate. The coating may be, for example, a coating primarily containing Al and Fe or a coating primarily containing Zn and Fe. The coating is also referred to as a coating, an alloyed plating layer, or an intermetallic compound layer.

A tensile strength of the steel sheet substrate of the second steel member is not limited. In a case where the joint component according to the present embodiment is made of a steel member which is divided into a region where deformation is concentrated and a region where deformation does not occur at the time of a collision, the tensile strength of the second steel member may be set to 500 MPa or more and 1,500 MPa or less, or to 500 MPa or more and 1,000 MPa or less. On the other hand, in a case of producing a joint component having high strength as a whole, the tensile strength of the second steel member may be more than 1,500 MPa, similarly to the first steel sheet.

A sheet thickness of the steel sheet substrate 21 of the second steel member 20 included in the joint component 1 according to the present embodiment is not limited, but is, for example, 0.8 to 3.2 mm.

The sheet thickness of the steel sheet substrate 21 of the second steel member 20 may be the same as or different from the sheet thickness of the steel sheet substrate 11 of the first steel member 10.

### (A3) joint Portion

In the joint component 1 according to the present embodiment, the first steel member 10 and the second steel member 20 are joined to each other by the joint portion 30 (through the joint portion). The joint portion 30 is formed by causing a steel sheet, which serves as a material of the first steel member, and a steel sheet, which serves as a material of the second steel member, to abut on each other and joining the butted portions by welding. The joint portion includes the weld metal that is melted and solidified by heat of the welding, and the heat-affected zone.

That is, the joint portion 30 is formed at the butted portions between the first steel member 10 and the second steel member 20 and includes the weld metal 31 and the heat-affected zone 32.

A joining method is not limited, but in terms of obtaining a joint that achieves a fast welding speed and high strength, a fusion welding method in which base metal is heated to a melting point or higher is preferable rather than a solid-state joining method such as friction stir welding or friction welding or a liquid-state/solid-state joining method such as brazing. Particularly, a method of using a high energy density heat source can be adopted from the viewpoint of productivity. Compared to plasma arc welding in which electrodes are consumed due to processing and electron beam welding in which a beam is attenuated in the air, joining by laser welding is preferable because no electrode is used and high-speed welding is possible in the air.

A size in the width direction of the weld metal 31 orthogonal to the extension direction (a so-called weld line direction) of the joint portion 30 of the joint component 1 according to the present embodiment is not particularly limited. However, when the weld metal comes into contact with a die and slides during forming, excessive stress is generated in the weld metal, and there is a possibility of cracking in a welded part. Therefore, a width set to avoid this problem is considered. The size in the width direction is, for example, 0.5 to 2.2 mm in the case of laser welding and, for example, 1.8 to 7.0 mm in the case of plasma arc welding.

### (A3-1) Weld Metal

In the weld metal that forms the joint portion 30 of the joint component 1 according to the present embodiment, when a cross section in the sheet thickness direction orthogonal to the extension direction of the joint portion is defined as a measuring surface, the average Cu content in the weld metal at this measuring surface is 0.03% or more and 3.00% or less by mass%. By including Cu in the weld metal, corrosion of the joint portion can be suppressed, so that the hydrogen embrittlement resistance of the joint portion is improved. Therefore, the average Cu content in the weld metal at the measuring surface in the weld metal is set to 0.03% or more. The average Cu content is preferably 0.05% or more, more preferably 0.10% or more, and even more preferably 0.15% or more.

On the other hand, when the average Cu content in the weld metal is more than 3.00%, the effect is saturated, and the cost increases. Therefore, the average Cu content is set to 3.00% or less. The average Cu content is preferably 2.00% or less, more preferably 1.00% or less, and even more preferably 0.80% or less.

In addition, at the same measuring surface, an average Al content in the weld metal is preferably less than 1.00% by mass%. When the average Al content in the weld metal is high, there are cases where quenching is not sufficient in a heat treatment described later, and a hardness of the weld metal decreases. Therefore, the average Al content is preferably less than 1.00%. The average Al content is more preferably less than 0.80%. A lower limit of the average Al content is not particularly limited, but may be about 0.01%.

In addition, at the same measuring surface, the weld metal preferably contains, by mass%, one or more of Mn, Cr, Mo, Ni, Sn, and W in a total amount of 1.2% or more. By including one or more of Mn, Cr, Mo, Ni, Sn, and W in the weld metal, corrosion can be further suppressed, and the hydrogen embrittlement resistance is improved. Therefore, the weld metal preferably contains one or more of Mn, Cr, Mo, Ni, Sn, and W in a total amount of 1.2% or more. The total amount of Mn, Cr, Mo, Ni, Sn, and W is more preferably 1.4% or more.

Cu/Al, which is a ratio of the average Cu content to the average Al content in the weld metal at the measuring surface, is preferably 0.15 to 3.90.

When Cu/Al is in the above range, an isotropically homogeneous structure can be obtained after quenching, and an effect of stably securing the strength of the welded part can be obtained. The reason is that since Cu is an austenite forming element and Al is a ferrite forming element, Cu/Al is an index indicating a width of an austenite region in an HS heating temperature range, and, in a case where Cu/Al is within the above range, a structure in the weld metal in a temperature range of around 900°C during HS heating becomes a fully austenitic single phase, so that it is possible to stably secure the hardenability and the strength in the structure in the weld metal during quenching. Accordingly, even when an external force is applied to the weld metal after quenching, local stress concentration on the structure of the weld metal is prevented due to the homogeneous structure in the weld metal, and, in a corrosive environment, corrosion resistance in a welded part, which serves as an embrittlement origin, is improved.

The amount of each of Cu, Al, Mn, Cr, Mo, Ni, Sn, and W contained in the weld metal of the joint portion 30 is obtained by the following method.

In the joint component 1, a cross section in the sheet thickness direction orthogonal to the extension direction (weld line) of the joint portion is cut out. A reflected electron image is acquired from this sample using a scanning electron microscope, and the amounts of Cu, Al, Mn, Cr, Mo, Ni, Sn, and W contained in the weld metal are obtained by performing spot elemental analysis (beam diameter 1 µm or less) on the weld metal using an electron probe micro-analyzer (EPMA). In the measurement, the weld metal is identified from the reflected electron image based on shading or shapes of unevenness of the image (a curved shape that is not a straight line unlike a steel sheet), analysis is performed on the weld metal at 10 points at equal intervals in a direction from a surface toward a rear surface of the weld metal in a welding centerline, and average values thereof are regarded as the amounts of Cu, Al, Mn, Cr, Mo, Ni, Sn, and W contained in the weld metal. The welding centerline is a line connecting centers of the weld metal in the width direction at the cross section (final solidification position).

In a butt joint produced in the present embodiment, in a case where the Al-based coating at a position to be butt-welded is not completely removed, Al is concentrated at a boundary (fusion line) between the weld metal and the base metal. However, when a degree of Al concentration is within the range of the present embodiment, an Al-concentrated region is not continuous in the weld line direction. Therefore, it is considered that the Al-concentrated region does not deteriorate strength of a joint and forms a feature unique to the joint portion.

A measurement method for finding this feature is as follows. First, a cross section in the sheet thickness direction orthogonal to the extension direction (weld line) of the joint portion is cut out, a boundary between the weld metal and a base metal is identified based on shading of the cross section obtained by mirror-polishing this sample and then performing nital etching, or using an electron probe micro-analyzer (EPMA). Next, measurement is performed at five points at equal intervals in a depth direction up to a depth position of 0.2 mm in the sheet thickness direction from the surface of the base metal (steel sheet substrate) of the steel sheet along the boundary between the weld metal and the base metal and at points having the highest amount of Al in the width direction by spot elemental analysis (beam diameter 1 µm or less) with the electron probe micro-analyzer (EPMA), and an average value thereof is regarded as an Al content of an end portion. In the present embodiment, an average Al concentration of the end portion is 0.10% or more and 1.90% or less by mass%.

The weld metal preferably has a Vickers hardness equal to or higher than that of the base metal on a low strength side in order to prevent fracture in the weld metal in a sheet assembly of the steel sheets to be butt-welded. That is, since the Vickers hardness is about 0.3 times the tensile strength (MPa unit), when the tensile strength of the first steel sheet substrate on a high strength side is set to more than 1,500 MPa and the tensile strength of the second steel sheet substrate on the low strength side to be combined is set to about 1,000 MPa, the center of the weld metal has a Vickers hardness of more than 350 Hv. In the present embodiment, the tensile strength of the second steel sheet substrate is not particularly limited, and the Vickers hardness of the weld metal to prevent fracture in the weld metal is preferably set to a hardness that is higher than the higher of the hardness of the second steel sheet substrate or 350 Hv.

The hardness of the weld metal is obtained by the following method.

A cross section of the weld metal is cut out in the same manner as described above, and the Vickers hardness is measured in accordance with JIS Z 2244:2009. In the measurement, a test force is set to 98 N, the measurement is performed at five points at equal intervals in the direction from the surface toward the rear surface of the weld metal in the welding centerline in the weld metal, and an average value thereof is regarded as the hardness of the weld metal.

### (A3-2) Heat-Affected Zone

In the joint component 1 according to the present embodiment, in the joint portion 30, the heat-affected zone 32 is formed around the weld metal 31, but the heat-affected zone 32 is not particularly limited. In addition, there are some portions that are indistinguishable from the steel sheet substrate (11 or 12) in normal observation, but the portions do not have to be distinguished.

### (A4) Properties of Joint Component

In the joint component 1 according to the present embodiment, the weld metal 31 of the joint portion 30 is controlled as described above, so that the corrosion resistance of the joint portion is improved. Therefore, the joint component 1 according to the present embodiment has a high strength such that a tensile strength of at least a part thereof is more than 1.5 GPa, and is excellent in the hydrogen embrittlement resistance of the joint portion.

In the present embodiment, the hydrogen embrittlement resistance is evaluated by an exposure test in an environment where the joint component is actually used or an accelerated corrosion test by a composite cycle test (CCT). For example, CCT is performed in accordance with the provisions of JASO standards M609 and M610, and the hydrogen embrittlement resistance is evaluated by the number of cycles during which the joint portion does not fracture.

A shape of the joint component 1 is not particularly limited. The first steel member 10 and/or the second steel member 20 may be a flat sheet or may be a formed body. A steel member that has been subjected to hot forming is a formed body in many cases, but a case where a steel member is a flat sheet is also referred to as a "steel member".

The joint component 1 according to the present embodiment is obtained by performing a heat treatment on the joint steel sheet as described later.

### (B) Joint Steel Sheet

Next, a joint steel sheet which serves as a material of the joint component 1 according to the present embodiment (hereinafter, referred to as the joint steel sheet according to the present embodiment in some cases) will be described. A joint component can be obtained by performing a heat treatment using a joint steel sheet described below as a material.

As shown in FIG. 2, a joint steel sheet S1 according to the present embodiment includes a first steel sheet S10, a second steel sheet S20, and a joint portion S30 which is formed at butted portions between the first steel sheet S10 and the second steel sheet S20 and includes a weld metal and a heat-affected zone. This first steel sheet S10 is a coated steel sheet having a steel sheet substrate S11 having a predetermined chemical composition and a coating (Al-based coating) S 12 that is formed on a surface of the steel sheet substrate S11 and contains Al.

In addition, when a cross section of the joint steel sheet S1 according to the present embodiment in a sheet thickness direction orthogonal to an extension direction (weld line) of the joint portion S30 is defined as a measuring surface, an average Cu content in the weld metal at the measuring surface is 0.03% or more and 3.00% or less by mass%.

### Hereinafter, each will be described.

### (B1) First Steel Sheet

The first steel sheet S10 included in the joint steel sheet S 1 according to the present embodiment has the steel sheet substrate S11 and the coating (Al-based coating) S12 that is formed on the surface of the steel sheet substrate S11 and contains Al.

### (B1-1) Steel Sheet Substrate

Ranges of the chemical composition of the steel sheet substrate S11 of the first steel sheet S10 included in the joint steel sheet S 1 according to the present embodiment are the same as the chemical composition of the steel sheet substrate 11 in the first steel member 10 described above, and the reason for its limitation is also the same. Here, the chemical composition of the steel sheet substrate S 11 refers to a chemical composition of a portion of the coated steel sheet excluding the Al-based coating S12 on the surface. For example, the chemical composition is obtained by taking a 1/4 thickness position in the sheet thickness direction from the surface of the steel sheet substrate S 11 as a representative position, and performing elemental analysis at the position using a general method such as ICP.

### [Metallographic Structure of Steel Sheet Substrate]

A metallographic structure of the steel sheet substrate S 11 of the first steel sheet S 10 included in the joint steel sheet S1 according to the present embodiment is not limited. The metallographic structure of the steel sheet substrate S11 primarily contains ferrite or pearlite, but may also contain bainite, martensite, and retained austenite within conditions of a manufacturing method, which will be described below. The martensite also includes tempered or auto-tempered martensite.

The metallographic structure of the steel sheet substrate S11 can be determined by the same method as the metallographic structure of the steel sheet substrate 11 in the joint component 1 according to the present embodiment described above.

### (B1-2) Al-Based Coating

The first steel sheet S 10 included in the joint steel sheet S 1 according to the present embodiment has the coating (hereinafter, Al-based coating) S 12 containing Al on the surface of the steel sheet substrate S 11. The Al-based coating S 12 is a coating primarily containing Al, and preferably contains 40 mass% or more of Al. The Al-based coating S12 more preferably contains 50 mass% or more of Al. The Al-based coating is also referred to as a coating or a plating layer. In addition to Al, the Al-based coating may further contain one or more of Si, Mg, Ca, Sr, Ti, Zn, Sb, Sn, Ni, Cu, Co, In, Bi, and REM, and a remainder including impurities. Generally, the Al-based coating contains about 10 mass% of Si in many cases.

A type of the Al-based coating is not limited. For example, the Al-based coating is a coating formed by hot-dip plating, electro plating, or thermal spraying.

An adhesion amount of the Al-based coating is preferably 25 g/m² or more. An upper limit of the adhesion amount of the Al-based coating is not particularly limited, but the adhesion amount may be set to 150 g/m² or less.

In addition, when the joint steel sheet S 1 is produced, a coating of a part of a portion to be welded (a portion where the steel sheet is melted by the heat of welding) may be removed as described later. Therefore, a part of the surface of the first steel sheet S 10 of the obtained joint steel sheet S 1 may also be in a state in which the Al-based coating S12 is removed.

The chemical composition and thickness of the Al-based coating S12 can be obtained, similar to the Al-Fe-based coating 12 of the first steel member 10, using scanning electron microscopic observation of a cross section and an electron probe micro-analyzer (EPMA).

### (B2) Second Steel Sheet

In the joint steel sheet according to the present embodiment, the second steel sheet S20 joined to the first steel sheet S10 through the joint portion is not particularly limited from the viewpoint of the hydrogen embrittlement resistance of the joint portion.

Specifically, the steel sheet substrate of the second steel sheet may include, for example, as a chemical composition, by mass%: C: 0.05% to 0.65%; Si: 2.00% or less; Mn: 0.15% to 3.00%; P: 0.050% or less; S: 0.0100% or less; N: 0.010% or less; O: 0.010% or less; Al: 1.00% or less; B: 0% to 0.0100%; Cu: 0% to 3.00%; Ti: 0% to 0.100%; Nb: 0% to 0.10%; Mo: 0% to 1.00%; Cr: 0% to 1.00%; Ni: 0% to 1.00%; V: 0% to 1.00%; Ca: 0% to 0.010%; Mg: 0% to 0.010%; Sn: 0% to 1.00%; W: 0% to 1.00%; Sb: 0% to 1.00%; Zr: 0% to 1.00%; REM: 0% to 0.30%; and a remainder: Fe and impurities.

The second steel sheet S20 may have a coating S22 on a part of the surface of the steel sheet substrate S21. The coating S22 may be, for example, a coating primarily containing Al or a coating primarily containing Zn. The coating is also referred to as a coating or a plating layer.

In addition, in the case of the coating primarily containing Al, the coating of a part of a portion to be welded (a portion where the steel sheet is melted by the heat of welding) may be removed as described later. Therefore, a part of the surface of the second steel sheet S20 of the obtained joint steel sheet S1 may also be in a state in which the coating is removed.

### (B3) Joint Portion

In the joint steel sheet S 1 according to the present embodiment, the first steel sheet S 10 and the second steel sheet S20 are joined by the joint portion S30. The joint portion includes a weld metal S31 formed by welding and a heat-affected zone (HAZ) S32 which is not melted by the heat of welding but is changed in structure.

The joint portion of the joint steel sheet S 1 according to the present embodiment extends along the butted portions between the first steel sheet and the second steel sheet. A size in the width direction of the weld metal S31 orthogonal to the extension direction (weld line) is not particularly limited.

### (B3-1) Weld Metal

When a cross section of the joint steel sheet S1 according to the present embodiment in a sheet thickness direction orthogonal to the extension direction of the joint portion S30 (weld line) is defined as a measuring surface, an average Cu content in the weld metal S31 at the measuring surface is 0.03% or more and 3.00% or less by mass%.

By including Cu in the weld metal, corrosion can be suppressed, and the hydrogen embrittlement resistance is improved. Therefore, the average Cu content in the weld metal S31 at the measuring surface is set to 0.03% or more. Therefore, the average Cu content is preferably 0.05% or more.

On the other hand, when the average Cu content is more than 3.00%, the above-described effect is saturated, and the cost increases. Therefore, the average Cu content is set to 3.00% or less. The average Cu content is preferably 2.00% or less.

In addition, when the average Al content in the weld metal S31 is high, there are cases where quenching is not sufficient in a heat treatment described later, and a hardness of the weld metal S31 decreases. Therefore, at the same measuring surface, the average Al content in the weld metal S31 is preferably less than 1.00% by mass%. The average Al content is more preferably less than 0.80%. Here, when the hardenability is enhanced by increasing the amount of alloying elements in the weld metal, a sufficient hardness (strength) can be secured after the heat treatment even when the average Al content is 1.00% or more.

A lower limit of the average Al content is not particularly limited, but may be about 0.01%.

In addition, at the same measuring surface, the weld metal S31 preferably contains, by mass%, one or more of Mn, Cr, Mo, Ni, Sn, and W in a total amount of 1.2% or more. By including Mn, Cr, Mo, Ni, Sn, and W in the weld metal, corrosion can be further suppressed, so that the hydrogen embrittlement resistance is improved. The total amount of Mn, Cr, Mo, Ni, Sn, and W is more preferably 1.4% or more.

The amounts of Cu, Al, Mn, Cr, Mo, Ni, Sn, and W contained in the weld metal S31 of the joint portion are obtained by the following method.

A cross section in the sheet thickness direction orthogonal to the weld line is cut out so that the weld metal can be observed in the joint steel sheet. A reflected electron image is acquired from this sample using a scanning electron microscope, and the amounts of Cu, Al, Mn, Cr, Mo, Ni, Sn, and W contained in the weld metal can be obtained by performing spot elemental analysis (beam diameter 1 µm or less) on a structure of the weld metal using an electron probe micro-analyzer (EPMA). In the measurement, the weld metal is identified from the reflected electron image based on shading or shapes of unevenness of the image (a curved shape that is not a straight line unlike a steel sheet), analysis is performed on the weld metal at 10 points at equal intervals in a direction from a surface toward a rear surface of the weld metal in a welding centerline, and average values thereof are regarded as the amounts of Cu, Al, Mn, Cr, Mo, Ni, Sn, and W contained in the weld metal.

### (B3-2) Heat-Affected Zone (HAZ)

In the joint steel sheet S 1 according to the present embodiment, the heat-affected zone S32 is formed around the weld metal S31 of the joint portion S30, but the heat-affected zone S32 is not particularly limited. In addition, there are some portions that are indistinguishable from the steel sheet substrate (S 11 or S12) in normal observation, but the portions do not have to be distinguished.

The joint steel sheet according to the present embodiment is obtained by joining the first steel sheet and the second steel sheet to each other by welding as described later.

### (C) Al-Based Coated Steel Sheet

Next, an Al-based coated steel sheet which serves as a material of the first steel sheet S 10 of the joint steel sheet S 1 according to the present embodiment (hereinafter, referred to as the Al-based coated steel sheet according to the present embodiment in some cases) will be described.

The Al-based coated steel sheet according to the present embodiment has a steel sheet substrate having a predetermined chemical composition and a coating (Al-based coating) that is formed on a surface of the steel sheet and contains Al.

The steel sheet substrate and the Al-based coating may be the same as those described above in B1-1 and B1-2, respectively.

The joint steel sheet according to the present embodiment can be obtained by using the Al-based coated steel sheet as the material of the first steel sheet S10 and joining the Al-based coated steel sheet to a steel sheet which serves as a material of the second steel sheet.

A steel sheet which serves as the material of second steel sheet is not limited, and this Al-based coated steel sheet may also be used as the material of the second steel sheet S20.

### (D) Manufacturing Method of Joint Component

Next, a manufacturing method of the joint component 1 according to the present embodiment will be described.

The joint component 1 according to the present embodiment is obtained by performing a heat treatment described below on the joint steel sheet S1 according to the present embodiment described above.

Hereinafter, each step will be described.

### <Heat Treatment Step>

The heat treatment is performed, for example, under conditions in which the joint steel sheet is heated to an Ac3 point to (Ac3 point + 300)°C at an average temperature rising rate of 1.0 to 1,000 °C/sec and is cooled to an Ms point (°C) or lower at an average cooling rate equal to or faster than an upper critical cooling rate in the steel sheet substrate S11 of the first steel sheet S10. The average temperature rising rate is set to an average value of temperature rising rates from the start of a temperature rise to a "target temperature (°C) - 20"°C, and the average cooling rate is set to an average value of cooling rates from the start of cooling to the Ms point (°C).

When the average temperature rising rate is slower than 1.0 °C/s, productivity of the heat treatment decreases, which is not preferable. On the other hand, when the average temperature rising rate is faster than 1,000 °C/s, a duplex grain structure is formed and the hydrogen embrittlement resistance decreases, which is not preferable.

Furthermore, when the heat treatment temperature is lower than the Ac3 point (°C), ferrite remains after cooling and the strength is insufficient, which is not preferable. On the other hand, when the heat treatment temperature is higher than the (Ac3 point + 300)°C, coarse grains are formed in the structure, and the hydrogen embrittlement resistance decreases, which is not preferable.

During heating, holding may be performed for 1 to 300 seconds within a range of the heating temperature ± 10°C.

Furthermore, after cooling, a tempering treatment may be performed in a temperature range of about 100°C to 600°C in order to adjust the strength of the steel member.

The upper critical cooling rate is a minimum cooling rate at which austenite is supercooled to form martensite without causing generation of ferrite or pearlite in the structure. When cooling is performed at slower than the upper critical cooling rate, ferrite or pearlite is formed, resulting in insufficient strength.

The Ac3 point, the Ms point, and the upper critical cooling rate are measured by the following method.

Strip-shaped test pieces having a width of 30 mm and a length of 200 mm are cut out from a steel sheet having the same chemical composition as that of the steel sheet substrate S11 of the first steel sheet S10 of the joint steel sheet according to the present embodiment, and the test pieces are heated to 1,000°C at an average temperature rising rate of 10 °C/s in a nitrogen atmosphere, held at the temperature for five minutes, and then cooled to room temperature at average various cooling rates. The cooling rate is set at intervals of 10 °C/sec from 1 °C/sec to 100 °C/sec. By measuring a change in thermal expansion of the test piece during heating at that time, the Ac3 point is measured.

Furthermore, among the test pieces cooled at the above cooling rates, the minimum cooling rate at which ferrite is not generated is defined as the upper critical cooling rate. A change in thermal expansion during cooling at the upper critical cooling rate is measured, and a transformation start point is regarded as the Ms point.

Here, in the series of heat treatments, hot forming such as hot stamping may be performed at the same time as while cooling to the Ms point is performed after heating in a temperature range of the Ac3 point to (Ac3 point + 300)°C, that is, cooling is performed at the upper critical cooling rate or faster. As the hot forming, there are bending, drawing, stretch-forming, hole expansion, flange forming, and the like. Furthermore, the present invention may be applied to a forming method other than press forming, for example, roll forming, as long as a measure for cooling the steel sheet is provided simultaneously with or immediately after hot forming. In a case where the thermal history described above is followed, hot forming may be repeatedly performed.

As described above, in the present embodiment, the first steel member 10 and the second steel member 20 of the "joint component 1" include both a formed body obtained by being cooled simultaneously with or immediately after hot forming and a flat sheet obtained by performing only a heat treatment.

The series of heat treatments can be performed by any method, and, for example, heating may be performed by induction heating, energization heating, infrared heating, or furnace heating. Cooling may also be performed by water cooling, die cooling, or the like.

### (E) Manufacturing Method of Joint Steel Sheet

Next, a manufacturing method of the joint steel sheet according to the present embodiment will be described.

### <A1-Based Coating Removal Step>

In the manufacturing of a joint steel sheet, when butt-joining steel sheets, an Al-based coated steel sheet is used as at least one steel sheet (a steel sheet which is to serve as the first steel sheet). In that case, when the welding is performed as it is without removing a coating of a portion to be welded, there is a possibility that the Al content in the weld metal becomes 1.00% or more. In order to prevent this, it is preferable to remove the coating of the portion to be welded by mechanical grinding such as milling or brushing, or by laser ablation or the like before manufacturing the joint steel sheet.

It is preferable that the amount of Al on the surface after the removal is set by removing the coating so that the average Al content in the weld metal incorporated into the weld metal during welding is less than 1.00%. The average Al content is more preferably 0.50% or less, and even more preferably 0.30%.

When removing the coating, the coating on the surface of the portion to be welded (a portion where the steel sheet is melted by the heat of welding) may be removed, and it is not necessary to remove the coating remaining of droop during shearing. In addition, in a case where a small amount of Al melts in the weld metal, the corrosion resistance of the welded part after HS improves. Therefore, the removal may be performed so that the Al-based coating of a part of the portion to be welded remains.

### <Welding Method>

In welding, it is important to sufficiently quench the weld metal by cooling after welding so as not to cause the weld metal to fracture during hot stamping (HS) forming. Therefore, it is necessary to use a welding method in which a penetration width of the steel sheet is small and a cooling rate after welding is fast. As a welding method that enables such welding, a welding method using a heat source that has a high energy density and can heat a narrow region in a concentrated manner (that is, keyhole welding is possible) such as laser welding, electron beam welding, and plasma welding is suitable. Particularly, laser welding is most suitable, and industrially, in addition to a CO₂ laser which is a gas laser, a YAG laser which is a solid-state laser and a fiber laser are used. In the present embodiment, a laser type is not particularly limited.

Hereinafter, a case where laser welding is performed as the welding method will be described.

### <Laser Welding Step>

In a laser welding step, a steel sheet which is to serve as the first steel sheet and a steel sheet which is to serve as the second steel sheet are butt-welded. The first steel sheet and the second steel sheet may be different from each other or may be the same in sheet thickness and strength. At the time of welding, it is necessary to consider a thickness of the weld metal.

### <Thickness of Weld Metal>

When the thickness of the weld metal is significantly thinner than the sheet thickness of the steel sheet substrate, a strength of a welded joint portion decreases. Therefore, a thickness of a thinnest portion of the weld metal is prevented from being less than 80% of the sheet thickness of the steel sheet substrate (when the sheet thicknesses of the butted steel sheet substrates are different, the thickness of the thinner steel sheet). This is independent of whether or not a filler material such as a filler wire is used. However, since the thickness tends to decrease in a case where the filler material is not used, it is preferable to use the filler material in order to avoid the thickness being less than 80%.

In a case where the thickness of the weld metal is less than 80% of the sheet thickness of the steel sheet substrate, even if the weld metal has a composition that can be easily quenched, there is a concern about fracture of the welded part during hot forming or a decrease in product strength even in a case where fracture does not occur.

On the other hand, in a case where welding is performed using a filler material such as a filler wire, it is better to increase the thickness of the weld metal by raising front and rear surfaces of weld beads from the surface of the steel sheet to be welded, thereby securing the strength of the welded part. However, in a case where a die does not have unevenness to avoid such an excess weld metal, when a height of the excess weld metal is excessive, a gap occurs between the steel sheet and the die at a position slightly away from the excess during hot forming, resulting in poor contact between the steel sheet and the die and in a region that is insufficiently quenched.

Therefore, in a case where the die does not have unevenness to avoid the excess weld metal, the front and rear surfaces of the weld metal are prevented from protruding outward from an extension line of the surface of the steel sheet (in a case where the steel sheets have different sheet thicknesses, the surface of the thicker steel sheet) as a reference by more than 500 µm. When the amount of the protrusion is 500 µm or less, the steel sheet can be sufficiently quenched using a die, particularly, a direct water cooling die (a die that cools the steel sheet by ejecting cooling water from the die).

### [Selection of Filler Material]

In the present embodiment, a filler material may be used to adjust the chemical composition of the weld metal that is formed during laser welding. As the filler material, either powder or wire form can be used. However, from the viewpoint of yield, it is suitable to supply the filler material in the form of a wire, that is, as a filler wire.

In the joint steel sheet according to the present embodiment, as described above, the average Cu content in the weld metal is 0.03% or more and 3.0% or less by mass%, and the average Al content in the weld metal is preferably less than 1.00 mass%. The chemical composition of the weld metal changes depending on the steel sheet to be welded, and in a case where the filler material is used, changes depending on the steel sheet, the filler material, and welding conditions. For example, the chemical composition of the weld metal changes depending on the sheet thickness of the steel sheet substrate used for welding, the components of the steel sheet substrate, the adhesion amount of the Al-based coating, the removal state of the Al-based coating, the interval between the steel sheets butted on each other (root gap), a chemical composition of the filler material, a supply amount (supply rate) of the filler material, and the like. Therefore, a weld metal having a desired chemical composition can be obtained by selecting the components, supply amount, and the like of the filler material depending on the steel sheets to be used and welding conditions and performing welding.

In the specification of the filler material, the components and the supply amount of the filler material may be estimated in advance by the following procedure, and the average Cu content and the average Al content in the weld metal may be experimentally checked using the estimated components and supply amount.

(i) First, a weld bead shape is estimated in advance from the sheet thickness of the Al-based coated steel sheet to be welded, root gap, and welding condition (weld heat input amount), a melting width of the Al-based coating is obtained from the estimated width of the weld bead on the front and rear surfaces of the steel sheet, and the amount of Cu that melts into the weld metal forming the weld bead from the Al-based coated steel sheet is estimated based on the melting width and the thickness of the Al-based coating.

Then, the amount of deposited metal is obtained from the estimated weld bead shape, and components of the weld metal are estimated from the compositions of the steel sheet substrate to be welded, the composition of the filler material (filler wire) to be used, and the amount of Cu that melts into the weld metal.

(ii) Next, the estimated components of the weld metal are examined, it is determined whether or not the components meet the above conditions. In a case where the components of the weld metal do not meet the conditions, the composition of the filler material (filler wire) is changed and it is determined whether or not to meet the conditions. In a case where the changed composition meets the conditions, the filler material is changed to the filler material (filler wire) meeting the conditions.

(iii) In a case where the filler material does not meet the conditions, the root gap is changed to increase the amount of the deposited metal, and the components of the weld metal are estimated again in the procedure of (i) described above. It is determined whether or not the weld metal meets the above conditions.

### [Other Conditions for Laser Welding]

As other conditions for laser welding, there are a laser output, a laser beam diameter, a welding speed, a shielding gas flow rate, and the like. The welding conditions may be appropriately selected based on the determination of the person concerned such that voids in the weld metal, undercut, and the like do not occur.

The laser output at a processing point (on the surface of the steel sheet) when a bead is produced by laser welding is not particularly specified. However, considering beam welding with high processing efficiency at which a deep hole called a keyhole is formed at a beam irradiation portion, a power density that satisfies a certain relationship with the beam diameter is necessary.

The power density is defined by an energy density of a laser beam on the surface of the steel sheet (= laser output / cross-sectional area πr² of the beam, where r is a distance (radius) from a center of the beam to a point where a beam intensity becomes 1/e²). Here, e indicates the base of the natural logarithm (Napier's constant).

When adjusting the laser output and the beam diameter, a lower limit of the power density is set to 5.0 × 10⁹ W/m² required for keyhole generation, and an upper limit thereof is set to 10¹³ W/m², which is a value at which evaporation of the steel sheet becomes excessively dominant and the base metal is lost. In a case of considering such a range of power density, the range of the laser output is set to a lower limit of 2 kW or more and an upper limit of 15 kW or less, and preferably a lower limit of 4 kW and an upper limit of 8 kW.

The beam diameter needs to be set considering stable melting of an end surface of the steel sheet even in a case where the root gap is large (there is a gap in a butt gap) in addition to the power density. Therefore, the beam diameter is set to be larger than the root gap. In tailored blank welding, welding is often performed with a root gap of 0 mm during butt welding, so that a lower limit of the beam diameter is set to 0.1 mm. Regarding an upper limit of the beam diameter, since the required power density increases as the beam diameter increases and the laser output needs to be unnecessarily increased in actual production, the upper limit is set to 1.8 mm. The beam diameter is preferably in a range of 0.3 to 0.9 mm.

A lower limit of the welding speed is set to 2 m/min from the viewpoint of production efficiency, and an upper limit thereof is not particularly defined. However, in the case of performing high-speed welding, it is necessary to increase the laser output, so that an increase in equipment cost and deterioration in running cost cannot be avoided. Therefore, the upper limit is preferably set to 8 m/min or less.

Shielding gases are used to cool plasma at a processing point at the time of laser irradiation or to protect an optical system such as a lens, and as well as He and Ar, which are inert gases, N₂ and air can also be used in a case where there is no problem with reactions with molten metal.

An appropriate value for the gas flow rate may be selected based on the determination of the person concerned and is often used in a range of, for example, 20 to 50 L/min. However, since a structure of a laser optical system forming a gas flow path varies, the gas flow rate is not limited to this range.

The root gap during butt welding is usually 0 mm in most cases in the production of a tailored blank material, but may be set to about 0.1 to 1.0 mm in order to adjust the components of the weld metal. The root gap is not limited to this range.

### (F) Manufacturing Method of Al-Based Coated Steel Sheet

The Al-based coated steel sheet suitable as the material of the first steel member included in the joint component according to the present embodiment (the Al-based coated steel sheet which serves as the material of the first steel sheet included in the joint steel sheet according to the present embodiment) can be manufactured, for example, by using a manufacturing method including steps shown in (i) to (vi) as follows.
(i) A slab preparation step of melting and casting a steel having the above chemical composition, to manufacture a slab
(ii) A hot rolling step of hot-rolling the obtained slab into a hot-rolled steel sheet
(iii) A hot-rolled sheet annealing step of annealing the hot-rolled steel sheet after coiling step as necessary
(iv) A cold rolling step of descaling the hot-rolled steel sheet after the coiling or after the hot-rolled sheet annealing step and cold-rolling the hot-rolled steel sheet into a cold-rolled steel sheet, as necessary
(v) An annealing step of annealing the hot-rolled steel sheet or the cold-rolled steel sheet into an annealed steel sheet as necessary
(vi) A coating step of applying an Al-based coating to the hot-rolled steel sheet, the cold-rolled steel sheet, or the annealed steel sheet to obtain an Al-based coated steel sheet

Hereinafter, each step in the manufacturing method will be described.

### <Slab Preparation Step>

In the slab preparation step, a steel having the above chemical composition is melted and casted to manufacture a slab provided for hot rolling. For example, a slab manufactured by melting molten steel having the above chemical composition (the same chemical composition as the chemical composition of the steel sheet substrate of the first steel member) using a converter or an electric furnace and performing a continuous casting method thereon can be used. Instead of the continuous casting method, an ingot-making method, a thin slab casting method, or the like may be adopted.

### <Hot Rolling>

In the hot rolling step, the slab is heated, subjected to rough rolling, then subjected to descaling as necessary, and finally subjected to finish rolling. Hot rolling conditions are not limited. In a coiling step after the finish rolling, for example, the hot-rolled steel sheet after the hot rolling is coiled in a temperature range of 820°C or lower. When a coiling temperature is higher than 820°C, the hot-rolled steel sheet is coiled while transformation hardly progresses and the transformation progresses in the coil, so that there are cases where a coil shape is defective.

### <Hot-Rolled Sheet Annealing Step>

In the hot-rolled sheet annealing step, for example, the hot-rolled steel sheet is annealed at 450°C to 800°C for five hours or longer in an atmosphere containing 80 vol% or more of nitrogen or in the air. Hot-rolled sheet annealing does not necessarily have to be performed, but hot-rolled sheet annealing using a continuous furnace, a batch furnace, or the like is preferable because the hot-rolled steel sheet can be softened and a load in the cold rolling step, which is the subsequent step, can be reduced.

### <Cold Rolling Step>

In the cold rolling step, the hot-rolled steel sheet or the hot-rolled steel sheet after the hot-rolled sheet annealing is descaled and cold-rolled into a cold-rolled steel sheet. Descaling and cold rolling do not necessarily have to be performed.

However, in a case where cold rolling is performed, a cumulative rolling reduction in the cold rolling is preferably set to 30% or more from the viewpoint of securing good flatness. On the other hand, in order to prevent a rolling force from becoming excessive, the cumulative rolling reduction in the cold rolling is preferably set to 80% or less.

A descaling method is not particularly limited, but pickling is preferable. In a case where pickling is performed, conditions may be within a known range, but it is preferable to remove only iron scale by pickling with hydrochloric acid or sulfuric acid.

### <Annealing Step>

In the annealing step before forming the coating, the hot-rolled steel sheet or the cold-rolled steel sheet is annealed in a temperature range of 700°C to 950°C into an annealed steel sheet. Annealing before forming the coating does not necessarily have to be performed, but the annealing is preferable because the cold-rolled steel sheet is softened in the annealing step and threading in the coating step, which is the subsequent step, is facilitated.

### <Coating Step>

In the coating step, an Al-based coating is formed on a surface of the steel sheet substrate (the hot-rolled steel sheet (including the hot-rolled steel sheet after the hot-rolled sheet annealing), the cold-rolled steel sheet, or the annealed steel sheet) to obtain an Al-based coated steel sheet. A method for forming the Al-based coating is not particularly limited, and a hot-dip plating method, an electro plating method, a vacuum vapor deposition method, a cladding method, a thermal spraying method, and the like can be used. The hot-dip plating method is the most popular in the industry.

In a case where hot-dip plating is performed, Fe is mixed in a plating bath as an impurity in addition to Al in many cases. Furthermore, in addition to the above elements, Si, Ni, Mg, Ti, Zn, Sb, Sn, Cu, Co, In, Bi, Ca, mischmetal, and the like may be contained in the plating bath as long as 70 mass% or more of A1 is contained.

In the case of performing hot-dip plating, plating may be performed after the annealed steel sheet after the annealing step is cooled to room temperature and is heated again, or hot-dip plating may be performed after performing cooling to 650°C to 750°C, which is close to a plating bath temperature, after annealing without performing cooling to room temperature once.

Pretreatments and post-treatments of the Al-based coating are not particularly limited, and precoating, solvent coating, an alloying treatment, temper rolling, or the like can be performed. As the alloying treatment, for example, annealing at 450°C to 800°C can be performed. Furthermore, as a post-treatment, temper rolling is useful for shape adjustment and the like, and can achieve, for example, a rolling reduction of 0.1% to 0.5%.

### [Examples]

Hereinafter, the present invention will be described more specifically with reference to examples, but the present invention is not limited to the examples.

First, in manufacturing coated steel sheets, joint steel sheets, and joint components, steels having the chemical compositions shown in Tables 1 and 2 were melted to obtain slabs for hot rolling.

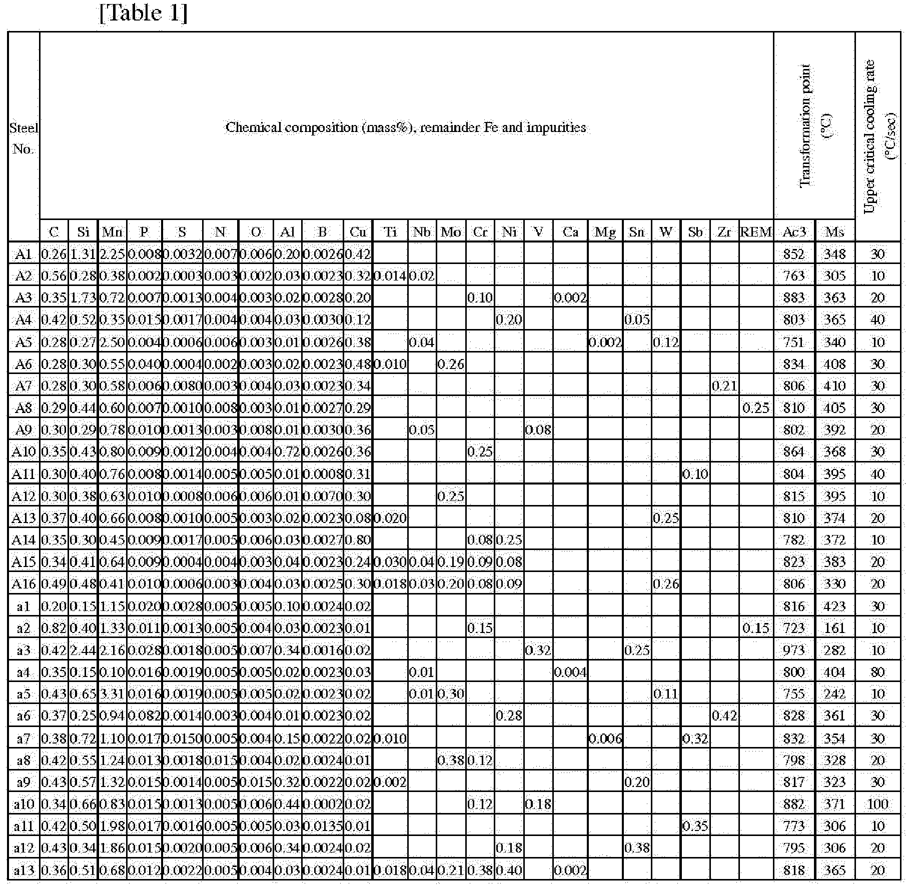

**[Table 2]**

| Steel No. | Chemical composition (mass%), remainder Fe and impurities | | | | | | | | | | | | | | Transformation point (°C) | | Upper critical cooling rate (°C/sec) |
|---|---|---|---|---|---|---|---|---|---|---|---|---|---|---|---|---|---|
| | C | Si | Mn | P | S | N | O | Al | B | Cu | Ti | Nb | Cr | Sn | Ac3 | Ms | |
| B1 | 0.06 | 0.03 | 1.51 | 0.012 | 0.0020 | 0.004 | 0.004 | 0.03 | 0.0003 | | 0.068 | 0.05 | | 0.04 | 859 | 476 | 100 |
| B2 | 0.08 | 0.34 | 1.65 | 0.008 | 0.0022 | 0.003 | 0.004 | 0.03 | 0.0026 | | 0.029 | 0.05 | 0.06 | 0.04 | 845 | 457 | 40 |
| B3 | 0.14 | 0.07 | 2.06 | 0.010 | 0.0012 | 0.004 | 0.004 | 0.03 | 0.0022 | 0.01 | 0.027 | | 0.21 | | 801 | 412 | 20 |
| B4 | 0.21 | 0.22 | 1.28 | 0.015 | 0.0025 | 0.004 | 0.003 | 0.03 | 0.0021 | 0.01 | 0.023 | | 0.23 | | 811 | 419 | 30 |
| B5 | 0.06 | 0.03 | 1.50 | 0.013 | 0.0020 | 0.004 | 0.030 | 0.03 | 0.0002 | | 0.066 | 0.05 | | | 859 | 476 | 100 |
| B6 | 0.08 | 0.36 | 1.64 | 0.014 | 0.0022 | 0.003 | 0.003 | 0.03 | 0.0037 | | 0.014 | 0.05 | 0.01 | | 845 | 457 | 40 |

Among the obtained slabs, Steel Nos. A1 to A16 and al to al3 were hot-rolled and coiled at a temperature of 800°C or lower to obtain hot-rolled steel sheets having a thickness of 2.7 mm. The hot-rolled steel sheets after the hot rolling were cold-rolled to obtain cold-rolled steel sheets (steel sheet substrates) having a thickness of 1.4 to 2.3 mm.

The obtained cold-rolled steel sheets (steel sheet substrates) were subjected to Al plating to obtain coated steel sheets having an Al-based coating (first steel sheets). In the coating step, the steel sheets were immersed in an Al plating bath at 680°C primarily containing Al and containing 10 mass% of Si, 2 mass% of Fe, and impurities (5 mass% or less in total) as the remainder, were then cooled to 200°C or lower, and were coiled. A chemical composition of the Al-based coated steel sheet at a 1/4 thickness position from a surface in a sheet thickness direction was similar to the chemical composition of the slab. In addition, an adhesion amount of the Al-based coating was in a range of 25 to 150 g/m².

These Al-based coated steel sheets were regarded as first steel sheets.

In addition, among the slabs, Steel Nos. B1 to B6 were hot-rolled and coiled at a temperature of 800°C or lower to obtain hot-rolled steel sheets having a thickness of 2.7 mm. The hot-rolled steel sheets after the hot rolling were cold-rolled to obtain cold-rolled steel sheets (steel sheet substrates) having a thickness of 0.8 to 2.0 mm.

Some of the obtained cold-rolled steel sheets (steel sheet substrates) were subjected to Al plating to obtain coated steel sheets having an Al-based coating (second steel sheets). In the coating step, the steel sheets were immersed in an Al plating bath at 680°C primarily containing Al and containing 10 mass% of Si, 2 mass% of Fe, and impurities (5 mass% or less in total) as the remainder, were then cooled to 200°C or lower, and were coiled. A chemical composition of the Al-based coated steel sheet at a 1/4 thickness position from a surface in a sheet thickness direction was similar to the chemical composition of the slab. In addition, an adhesion amount of the Al-based coating was in a range of 25 to 150 g/m².

In addition, some of the cold-rolled steel sheets were subjected to Zn plating to obtain coated steel sheets having a Zn-based coating (second steel sheets), and in the coating step, the steel sheets were immersed in a molten zinc bath at 670°C primarily containing Zn and containing impurities as the remainder, were then cooled to 200°C or lower, were heated to 600°C to be subjected to an alloying treatment, and were then coiled. A chemical composition of the Zn-based coated steel sheet at a 1/4 thickness position from a surface in a sheet thickness direction was similar to the chemical composition of the slab. In addition, an adhesion amount of the Zn-based coating was in a range of 25 to 150 g/m².

In addition, some of the cold-rolled steel sheets were not subjected to plating and were left as cold-rolled steel sheets (steel sheet substrates) to be used as second steel sheets.

Next, one type of the first steel sheets and one type of the second steel sheets were selected, end portions were caused to abut on each other so that respective surfaces thereof were substantially parallel to each other. As shown in Tables 4-1 to 4-10, the coating was removed from some of the steel sheets, a predetermined root gap (0.00 to 0.80 mm) was then set, and the two steel sheets were laser-welded to obtain a joint steel sheet using a filler material as necessary.

Regarding the removal of the Al-based coating, the Al-based coating was ground by a width of 1.0 mm in the sheet thickness direction from the end portions of the steel sheets butt-joined on both surfaces of the steel sheets, and the removal of the Al-based coating was classified into a case where a part of the Al-based coating remained and a case where the entire Al-based coating was removed.

In addition, in a case where a filler material was used during welding, a filler wire having a diameter of 0.9 mm and having the chemical composition shown in Table 3 was used.

For the laser welding, a condensing optical system having a focal length of 300 mm and a condensing spot diameter of 0.6 mm was used. Shielding during welding was performed using a shield nozzle (inner diameter 6 mm) coaxial to a laser beam with a standoff distance (a distance between a nozzle tip end and the surface of the steel sheet) set to 10 mm under a condition in which an Ar gas flow rate was 30 L/min. A welding speed and a processing point output were set to be constant at 5 m/min and 5.5 kW, a supply rate of the filler material was adjusted according to the sheet thickness and the root gap, and a width direction size of the weld metal was set to be approximately equal to the sheet thickness. In addition, a thickness of the weld metal was set to 80% or more of the sheet thickness of the steel sheet substrate (in a case where the sheet thicknesses of the steel sheets were different, the thinner steel sheet), and front and rear surfaces of the weld metal were set so as not to protrude outward from an extension line of front and rear surfaces of the steel sheet (in a case where the steel sheets have different sheet thicknesses, the thicker steel sheet) as a reference by 200 µm or more.

**[Table 3]**

| Filler No. | Chemical composition (mass%), remainder Fe and impurities | | | | | | | | | |
|---|---|---|---|---|---|---|---|---|---|---|
| | C | Si | Mn | Al | Cu | Mo | Cr | Ni | Sn | W |
| C1 | 0.12 | 0.01 | 2.05 | | 0.35 | 0.49 | 0.01 | 0.01 | | |
| C2 | 0.07 | 0.86 | 1.45 | | 0.32 | | 0.02 | 0.01 | | |
| C3 | 0.15 | 0.01 | 1.80 | 0.01 | 3.05 | 0.45 | 0.10 | 0.50 | 0.20 | 0.20 |
| C4 | 0.08 | 0.76 | 1.50 | | 0.15 | | 0.01 | 0.02 | 0.01 | |
| C5 | 2.50 | | 4.50 | | 5.12 | | 2.50 | 5.10 | | |

In the obtained joint steel sheets and joint components, the amounts of Cu, Al, Mn, Cr, Mo, Ni, Sn, and W in the weld metal were measured by the above-described method.

Next, the obtained joint steel sheets were subjected to a heat treatment of heating to a heating temperature at the average temperature rising rate shown in Tables 4-1 to 4-10, holding in a range of the heating temperature ± 10°C for 90 seconds, and cooling to an Ms point or lower at the average cooling rate shown in Tables 4-1 to 4-10 to obtain joint components.

In the obtained joint components, the amounts of Cu, Al, Mn, Cr, Mo, Ni, Sn, and W in the weld metal were measured by the above-described method.

In addition, a hardness of the weld metal, tensile strengths of the first steel member and the second steel member, and a limit cycle in CCT were evaluated by the following methods.

In addition, in a case where an Al-Fe-based coating (a coating of 70 mass% or more of Al and Fe) was formed, a thickness thereof was measured.

### [Hardness of Weld Metal]

A cross section of the weld metal was cut out in the same manner as described above, and the Vickers hardness was measured in accordance with JIS Z 2244:2009. In the measurement, a test force was set to 98 N, the measurement was performed at five points at equal intervals in a direction from the surface toward the rear surface of the weld metal in a welding centerline in the weld metal, and an average value thereof was regarded as the hardness of the weld metal. In this example, a case having a Vickers hardness of higher than the higher of the hardness of the steel sheet substrate of the second steel member or 350 Hv was evaluated as having a high hardness and being preferable.

### [Tensile Strength]

A tensile test was conducted in accordance with the regulations of ASTM Standard E8. The first steel member and the second steel member were cut from the joint component such that a longitudinal direction of a test piece was parallel to a weld line, avoiding the end portion and the weld metal, both surfaces were evenly ground by a thickness of 1.2 mm, and thereafter a half-size sheet-shaped test piece of ASTM Standard E8 (parallel portion length: 32 mm, parallel portion sheet width: 6.25 mm) was collected. In a case where the sheet thickness was less than 1.2 mm, a half-size sheet-shaped test piece of ASTM Standard E8 was collected after removing the coating or mill scale (oxide scale). Then, a strain gauge having a gauge length of 5 mm was attached to a center of a parallel portion, a room temperature tensile test was conducted at a strain rate of 3 mm/min, and a tensile strength (maximum strength) was measured. In this example, when the tensile strength of at least the first steel member was more than 1,500 MPa, it was determined that the joint component had a sufficient tensile strength.

### [Limit Cycle in CCT]

Hydrogen embrittlement resistance was evaluated by an accelerated corrosion test by CCT (composite cycle test). Specifically, a strip-shaped test piece having a width of 8 mm and a length of 68 mm was cut out from the joint component so as to be orthogonal to the weld line and to have the weld line at the center of the test piece in the longitudinal direction. Then, a strain gauge (gauge length: 5 mm) similar to that in the tensile test was attached to the center of the surface of the test piece in the width and length directions, and the test piece was bent with a four-point jig up to a strain equivalent to 1/2 of the tensile strength of the first steel member. The test piece subjected to the four-point bending test was subjected to CCT together with the jig in accordance with the provisions of JASO standards M609 and M610, and was evaluated by the number of cycles at which the welded part did not fracture. CCT was performed up to 360 cycles, and a case where fracture did not occur up to 150 cycles was determined to have excellent hydrogen embrittlement resistance.

In addition, for a test piece that did not fracture up to 360 cycles, a thickness reduction due to corrosion in the welded part in the sheet thickness direction was measured, and the corrosion resistance was evaluated. Specifically, rust on the test piece was removed with a solution obtained by adding an inhibitor to 10% diammonium hydrogen citrate, and for a point of the welded part that was most likely to be corroded, measurement was performed at 10 points in the sheet thickness direction with a point micrometer having a tip end SR (radius) of 0.3 mm. A value of an average value of the 10 points / the sheet thickness before corrosion × 100 was regarded as the thickness reduction due to corrosion (%). Corrosion resistance was evaluated in three levels, A, B, and C according to the degree of thickness reduction due to corrosion.

Specifically, a case where the thickness reduction due to corrosion was less than 30% was evaluated as A, a case where the thickness reduction due to corrosion was 30% or more and less than 50% was evaluated as B, and a case where the thickness reduction due to corrosion was 50% or more was evaluated as C.

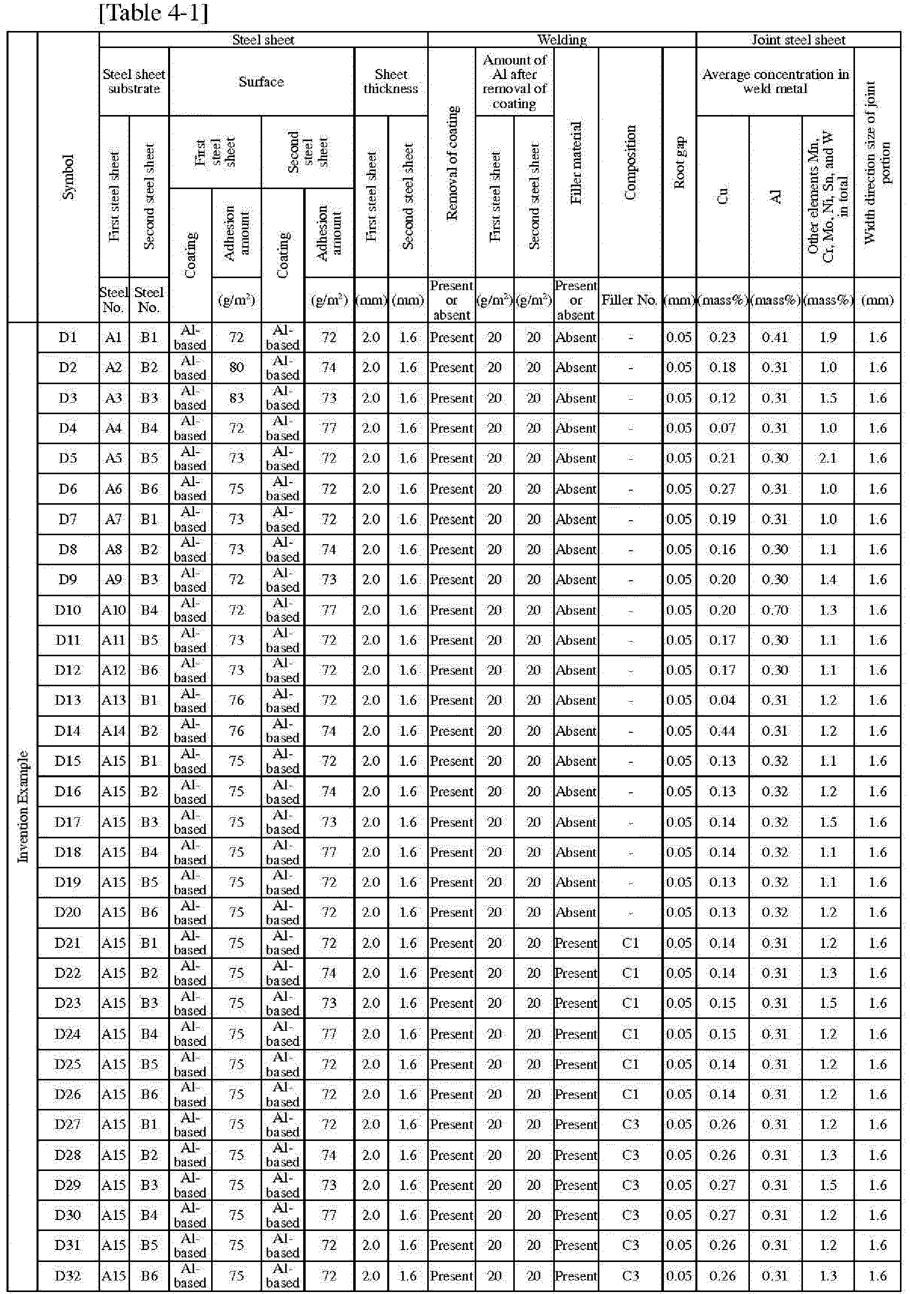

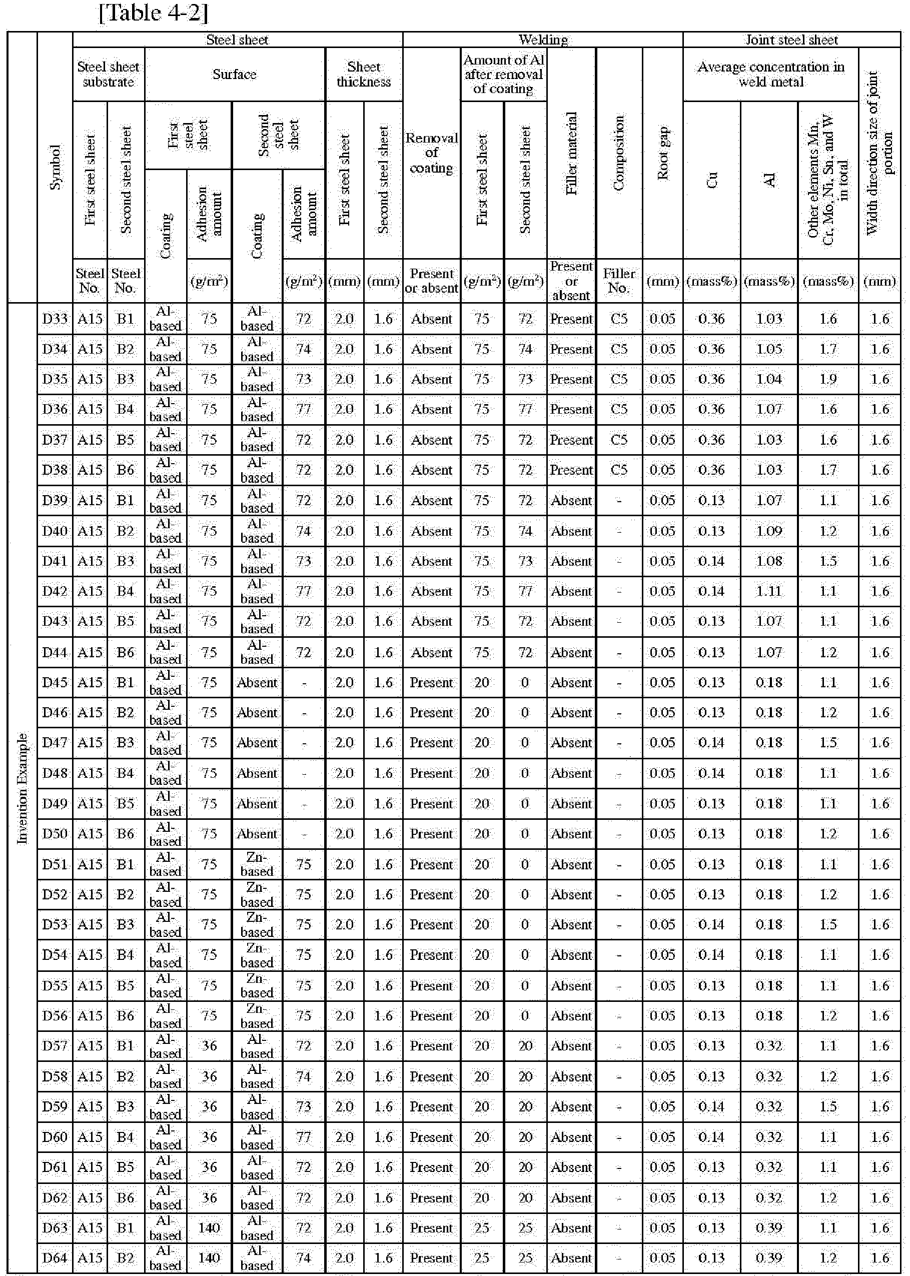

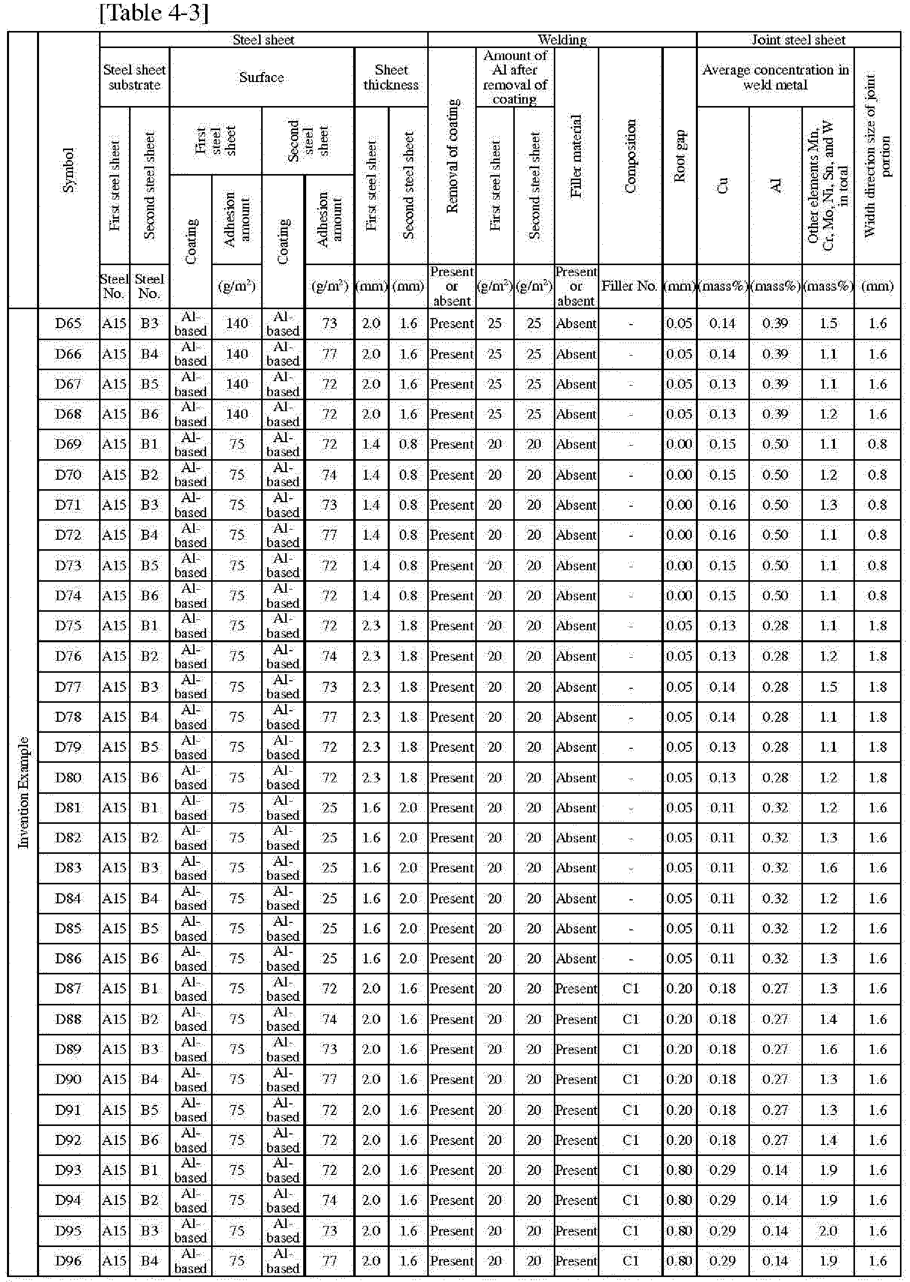

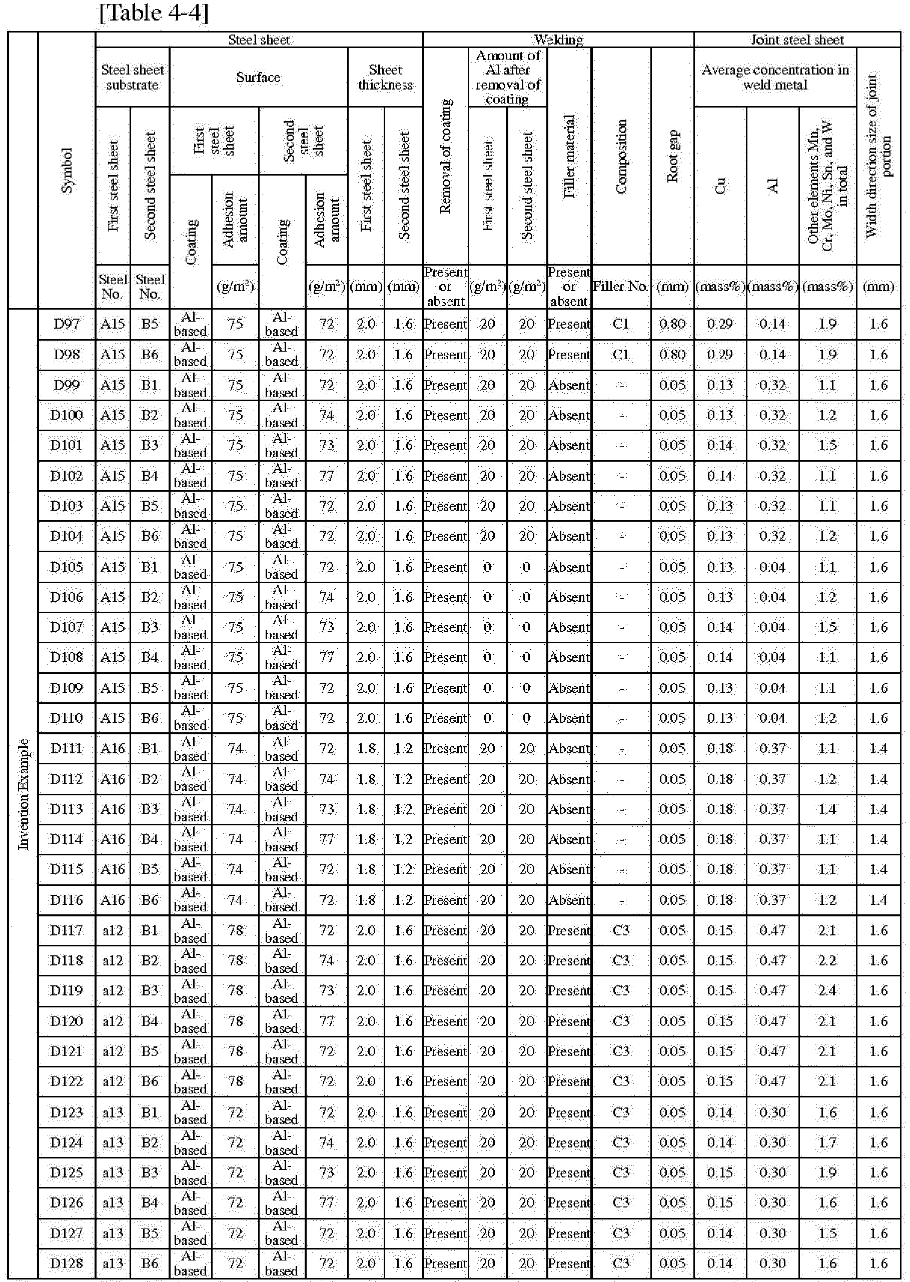

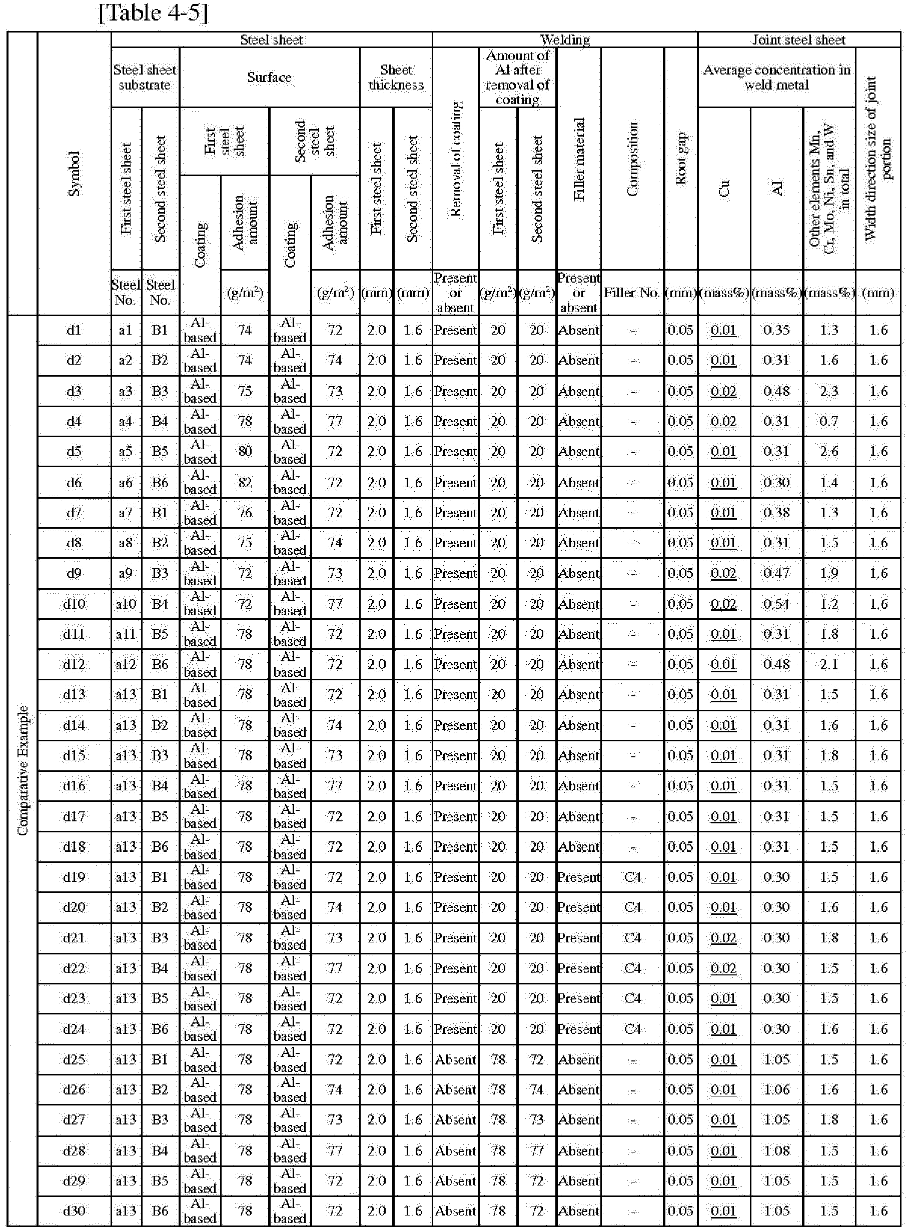

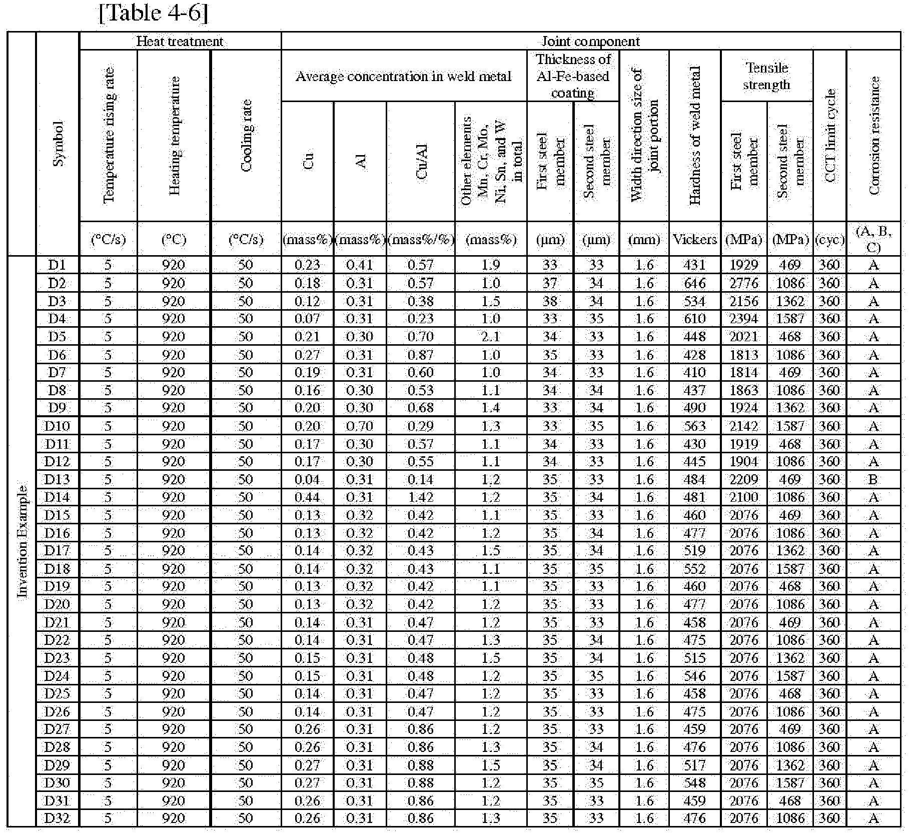

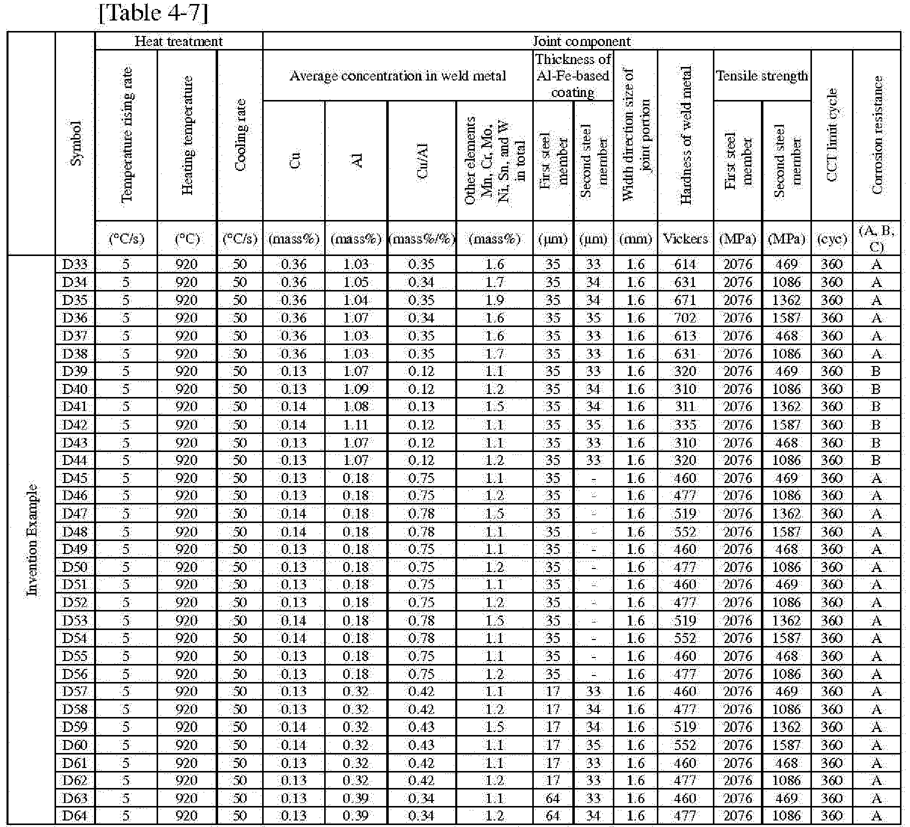

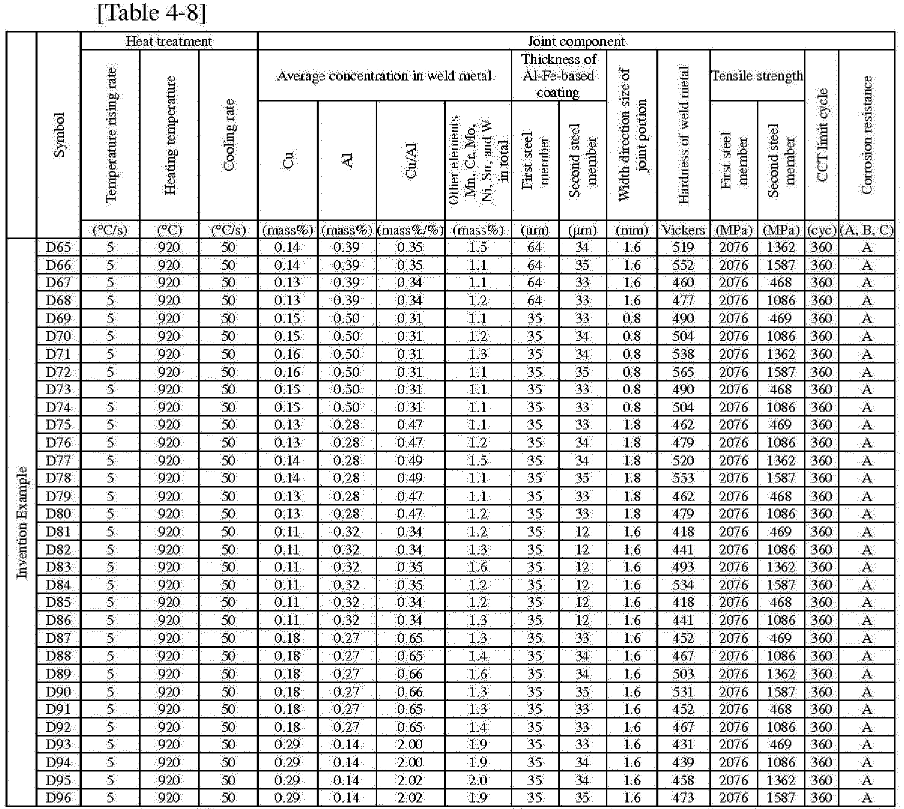

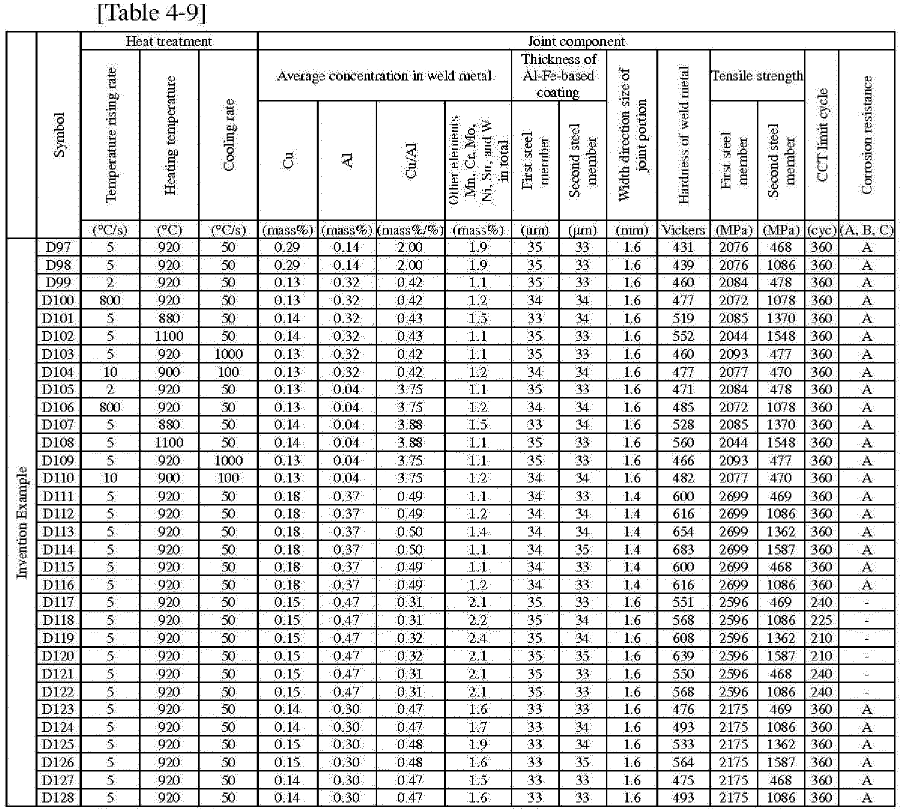

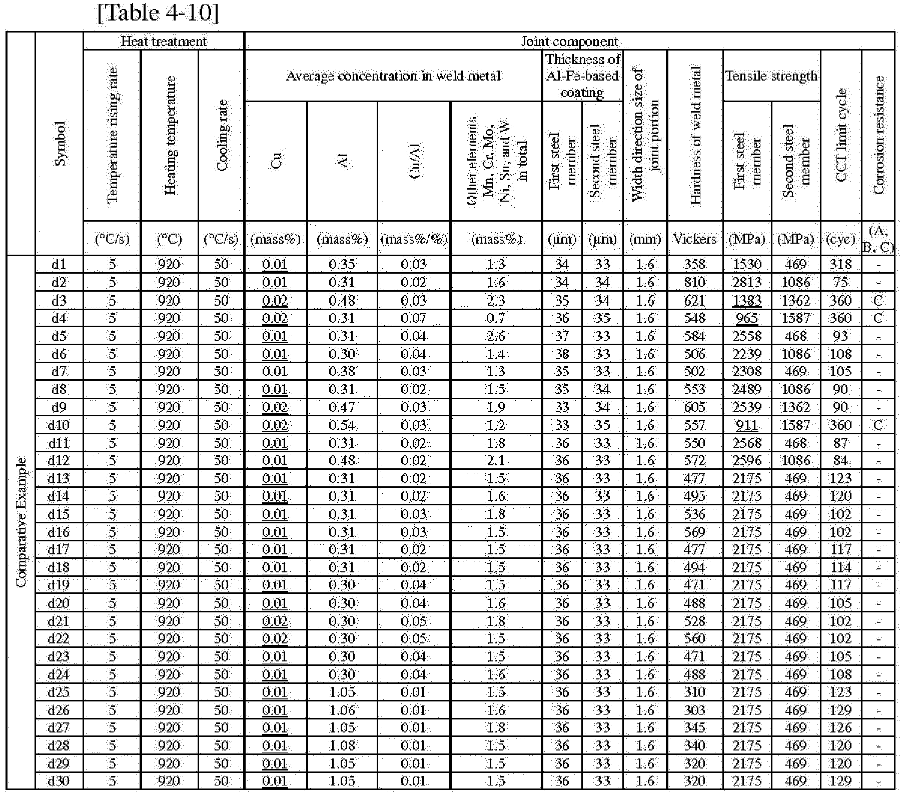

As shown in Tables 4-1 to 4-10, in Invention Examples D1 to D128 satisfying the ranges of the present invention, at least some of the joint components had a tensile strength of more than 1.5 GPa, and the hydrogen embrittlement resistance was also excellent. In addition, particularly in the examples where Cu/Al was in the preferable range, the corrosion resistance was also excellent.

Contrary to this, in Comparative Examples d1 to d30 that did not satisfy the ranges of the present invention, at least one of hydrogen embrittlement resistance or tensile strength was inferior.

### [Industrial Applicability]

According to the present invention, it is possible to obtain a high strength joint component having a joint portion having excellent hydrogen embrittlement resistance. The joint component according to the present invention is particularly suitable for use as a vehicle frame component. Since the steel member of the present invention has high strength and excellent hydrogen embrittlement resistance, the steel member contributes to an improvement in fuel efficiency and collision safety when being applied to a vehicle component.

### [Brief Description of the Reference Symbols]

1: Joint component
10: First steel member
11: Steel sheet substrate
12: Al-Fe-based coating
20: Second steel member
21: Steel sheet substrate
22: Coating
30: Joint portion
31: Weld metal
32: Heat-affected zone
S1: Joint steel sheet
S10: First steel sheet
S11: Steel sheet substrate
S12: Al-based coating
S20 Second steel sheet
S21: Steel sheet substrate
S22: Coating
S30: Joint portion
S31: Weld metal
S32: Heat-affected zone

## Claims

1. A joint component comprising:
a first steel member;
a second steel member; and
a joint portion which is formed at butted portions between the first steel member and the second steel member and includes a weld metal and a heat-affected zone,
wherein the first steel member includes a steel sheet substrate and an Al-Fe-based coating formed on a surface of the steel sheet substrate, and has a tensile strength of more than 1,500 MPa, and
when a cross section of the weld metal in a sheet thickness direction orthogonal to an extension direction of the joint portion is defined as a measuring surface, an average Cu content in the weld metal at the measuring surface is 0.03% or more and 3.00% or less by mass%.

2. The joint component according to claim 1,
wherein a Vickers hardness of the weld metal at the measuring surface is a hardness that is higher than the higher of a hardness of a steel sheet substrate of the second steel member or 350 Hv.

3. The joint component according to claim 1,
wherein an average Al content in the weld metal at the measuring surface is less than 1.00% by mass%.

4. The joint component according to claim 2,
wherein an average Al content in the weld metal at the measuring surface is less than 1.00% by mass%.

5. The joint component according to claim 3,
wherein Cu/Al, which is a ratio of the average Cu content to the average Al content in the weld metal at the measuring surface, is 0.15 to 3.90.

6. The joint component according to claim 4,
wherein a ratio of the average Cu content to the average Al content in the weld metal at the measuring surface is 0.15 to 3.90.

7. The joint component according to any one of claims 1 to 6,
wherein the steel sheet substrate of the first steel member contains, as a chemical composition, by mass%:
C: 0.25% to 0.65%;
Si: 2.00% or less;
Mn: 0.15% to 3.00%;
P: 0.050% or less;
S: 0.0100% or less;
N: 0.010% or less;
O: 0.010% or less;
Al: 1.00% or less;
B: 0.0005% to 0.0100%;
Cu: 0% to 3.00%;
Ti: 0% to 0.100%;
Nb: 0% to 0.10%;
Mo: 0% to 1.00%;
Cr: 0% to 1.00%;
Ni: 0% to 1.00%;
V: 0% to 1.00%;
Ca: 0% to 0.010%;
Mg: 0% to 0.010%;
Sn: 0% to 1.00%;
W: 0% to 1.00%;
Sb: 0% to 1.00%;
Zr: 0% to 1.00%;
REM: 0% to 0.30%; and
a remainder: Fe and impurities.

8. The joint component according to claim 7,
wherein a Cu content in the chemical composition of the steel sheet substrate of the first steel member is 0.05% to 3.00%.

9. The joint component according to any one of claims 1 to 6,
wherein a total amount of one or more of Mn, Cr, Mo, Ni, Sn, and W in the weld metal at the measuring surface is 1.2% or more.

10. The joint component according to claim 7,
wherein a total amount of one or more of Mn, Cr, Mo, Ni, Sn, and W in the weld metal at the measuring surface is 1.2% or more.

11. The joint component according to claim 8,
wherein a total amount of one or more of Mn, Cr, Mo, Ni, Sn, and W in the weld metal at the measuring surface is 1.2% or more.

12. The joint component according to any one of claims 1 to 6,
wherein a tensile strength of the second steel member is 500 MPa or more and 1,500 MPa or less.

13. The joint component according to claim 7,
wherein a tensile strength of the second steel member is 500 MPa or more and 1,500 MPa or less.

14. The joint component according to claim 8,
wherein a tensile strength of the second steel member is 500 MPa or more and 1,500 MPa or less.

15. The joint component according to claim 9,
wherein a tensile strength of the second steel member is 500 MPa or more and 1,500 MPa or less.

16. The joint component according to claim 10,
wherein a tensile strength of the second steel member is 500 MPa or more and 1,500 MPa or less.

17. The joint component according to claim 11,
wherein a tensile strength of the second steel member is 500 MPa or more and 1,500 MPa or less.

18. Ajoint steel sheet comprising:
a first steel sheet;
a second steel sheet; and
a joint portion which is formed at butted portions between the first steel sheet and the second steel sheet and includes a weld metal and a heat-affected zone,
wherein the first steel sheet includes
a steel sheet substrate, and
an Al-based coating formed on a surface of the steel sheet substrate, and
when a cross section of the weld metal in a sheet thickness direction orthogonal to an extension direction of the joint portion is defined as a measuring surface, an average Cu content in the weld metal at the measuring surface is 0.03% or more and 3.00% or less by mass%.

19. The joint steel sheet according to claim 18,
wherein an average Al content in the weld metal at the measuring surface is less than 1.00% by mass%.

20. The joint steel sheet according to claim 18 or 19,
wherein the steel sheet substrate of the first steel sheet contains, as a chemical composition, by mass%:
C: 0.25% to 0.65%;
Si: 2.00% or less;
Mn: 0.15% to 3.00%;
P: 0.050% or less;
S: 0.0100% or less;
N: 0.010% or less;
O: 0.010% or less;
Al: 1.00% or less;
B: 0.0005% to 0.0100%;
Cu: 0% to 3.00%;
Ti: 0% to 0.100%;
Nb: 0% to 0.10%;
Mo: 0% to 1.00%;
Cr: 0% to 1.00%;
Ni: 0% to 1.00%;
V: 0% to 1.00%;
Ca: 0% to 0.010%;
Mg: 0% to 0.010%;
Sn: 0% to 1.00%;
W: 0% to 1.00%;
Sb: 0% to 1.00%;
Zr: 0% to 1.00%;
REM: 0% to 0.30%; and
a remainder: Fe and impurities.

21. The joint steel sheet according to claim 20,
wherein a Cu content in the chemical composition of the steel sheet substrate of the first steel sheet is 0.05% to 3.00%.

22. The joint steel sheet according to claim 18 or 19,
wherein a total amount of one or more of Mn, Cr, Mo, Ni, Sn, and W in the weld metal at the measuring surface is 1.2% or more.

23. The joint steel sheet according to claim 20,
wherein a total amount of one or more of Mn, Cr, Mo, Ni, Sn, and W in the weld metal at the measuring surface is 1.2% or more.

24. The joint steel sheet according to claim 21,
wherein a total amount of one or more of Mn, Cr, Mo, Ni, Sn, and W in the weld metal at the measuring surface is 1.2% or more.
